(19) Europäisches Patentamt
European Patent Office
Office européen des brevets

(11) EP 3 728 384 B1

(12) # EUROPÄISCHE PATENTSCHRIFT

(45) Veröffentlichungstag und Bekanntmachung des Hinweises auf die Patenterteilung:
**01.03.2023 Patentblatt 2023/09**

(21) Anmeldenummer: **18815219.3**

(22) Anmeldetag: **14.12.2018**

(51) Internationale Patentklassifikation (IPC):
***C08G 18/76*** *(2006.01)* ***C08G 18/02*** *(2006.01)*
***C08G 18/18*** *(2006.01)*

(52) Gemeinsame Patentklassifikation (CPC):
**C08G 18/022; C08G 18/1825; C08G 18/1866; C08G 18/7664; C08G 18/7671**

(86) Internationale Anmeldenummer:
**PCT/EP2018/084856**

(87) Internationale Veröffentlichungsnummer:
**WO 2019/121348 (27.06.2019 Gazette 2019/26)**

(54) **VERFAHREN ZUR HERSTELLUNG ISOCYANURATGRUPPEN-HALTIGER ISOCYANAT-MISCHUNGEN**

METHOD FOR PRODUCING ISOCYANATE MIXTURES CONTAINING ISOCYANURATE GROUPS

PROCÉDÉ DE PRÉPARATION DES MÉLANGES D'ISOCYANATES CONTENANT DES GROUPES ISOCYANURATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2017 EP 17209262**

(43) Veröffentlichungstag der Anmeldung:
**28.10.2020 Patentblatt 2020/44**

(73) Patentinhaber: **Covestro Deutschland AG**
**51373 Leverkusen (DE)**

(72) Erfinder:
- **HAHN, Christian**
**51375 Leverkusen (DE)**
- **ARNTZ, Hans-Detlef**
**51491 Overath (DE)**
- **SCHUBERT, Stephan**
**51375 Leverkusen (DE)**
- **FELSKE, Ernst**
**41464 Neuss (DE)**
- **HOUBEN, Claudia**
**51061 Köln (DE)**
- **BEHRENDT, Frank**
**40764 Langenfeld (DE)**

(74) Vertreter: **Levpat**
**c/o Covestro AG**
**Gebäude 4825**
**51365 Leverkusen (DE)**

(56) Entgegenhaltungen:
**DE-A1-102004 060 121**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 728 384 B1

## Beschreibung

Die vorliegende Erfindung betrifft ein kontinuierliches Verfahren zur Herstellung einer Isocyanurat-haltigen Isocyanat-Mischung, bei dem in einem **Schritt a)** eine Mischung aus einer ersten und einer zweiten Isocyanat-Komponente sowie eines Isocyanatgruppen-Trimerisierungskatalysators bereitgestellt wird, in einem **Schritt b)** das in Schritt a) erhaltene Gemisch in einer ersten Verweilzeitzone bei erhöhter Temperatur umgesetzt wird, in einem **Schritt c)** das in Schritt b) erhaltene Reaktionsgemisch, optional nach Zugabe eines Abstoppers, in einer zweiten Verweilzeitzone weiter erhitzt wird, und in einem **Schritt d)** das in Schritt c) erhaltene Reaktionsgemisch durch Temperaturerniedrigung in einer dritten Verweilzeitzone unter Erhalt der angestrebten Isocyanurat-haltigen Isocyanat-Mischung abgekühlt wird.

Die Trimerisierung von organischen Isocyanaten R-NCO zu *Isocyanuraten* ist im Stand der Technik bekannt.

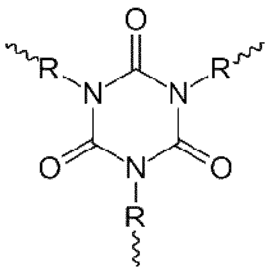

Schema 1: Das Isocyanurat-Strukturelement. R = organischer Rest.

Isocyanurat-haltige Isocyanate können vorteilhaft eingesetzt werden, um beispielsweise das Hochtemperaturverhalten, die Brandeigenschaften oder das Alterungsverhalten von Polyurethanen (*PUR*) zu verbessern; man spricht dann von Polyisocyanurat-haltigen (*PIR-haltigen*) Polyurethanen. Zu diesem Zweck hat es sich bewährt, die Trimerisierungsreaktion nicht während des eigentlichen Polyurethanaufbaus durchzuführen, da die Trimerisierung in Verbindung mit der PUR-Bildungsreaktion einen weiteren Temperaturanstieg (zusätzlich zu dem Temperaturanstieg infolge der Exothermie des Aufbaus der PUR-Bindungen) und bei Verschäumungsreaktionen einen weiteren Druckanstieg verursacht (wie dies bei konventionellen PUR/PIR-Schäumen mit einer PIR-Bildungsreaktion unmittelbar im Anschluss an die PUR-Bildungsreaktion in demselben Verschäumungsprozess der Fall ist), und zwar zu einem Zeitpunkt, an dem der Polymeraufbau bereits weit fortgeschritten ist und infolgedessen die beginnende Haftung des Polymers an Grenzflächen (beispielsweise eines metallischen Trägers) durch die auftretenden Scherkräfte wieder gelöst werden kann. Es hat sich daher bewährt, zunächst Mischungen aus Isocyanuraten und nicht modifizierten Isocyanaten herzustellen und mit diesen dann die PUR-Bildungsreaktion durchzuführen.

WO 2009/039332 A1 befasst sich mit der Aufgabenstellung, die selektive Produktion von MDI mit erhöhter Viskosität und Funktionalität in verstärktem Ausmaß zu ermöglichen, ohne gleichzeitig die Menge an produziertem 2-Ring-MDI zu erhöhen. Zu diesem Zweck lehrt die Anmeldung, konventionelles MDI (eine Mischung aus 2-Ring-MDI [MMDI] und den höheren Homologen, die 3 und mehr aromatische Ringe enthalten [PMDI]) in Gegenwart eines geeigneten Katalysators zu trimerisieren, den Katalysator zu deaktivieren und schließlich die so erhaltene Mischung mit konventionellem MDI in einem solchen Maß abzumischen, dass ein Produkt mit der gewünschten Viskosität und dem gewünschten NCO-Gehalt erhalten wird. Es werden nur diskontinuierlich betriebene Verfahren beschrieben.

US 4,743,672 befasst sich mit der Herstellung flüssiger PMDI-haltiger MDI-Produkte mit hohem 2-Kern-Gehalt und vergleichsweise hoher Viskosität. Zu diesem Zweck lehrt die Anmeldung, MDI in Gegenwart eines Trimerisierungskatalysators unter Erhalt eines Isocyanurat-haltigen Polyisocyanats umzusetzen, den Trimerisierungskatalysator zu deaktivieren und anschließend das so erhaltene Isocyanurat-haltige Polyisocyanat mit Standard-PMDI-Zusammensetzungen abzumischen. Es werden nur diskontinuierlich betriebene Verfahren beschrieben. Die Anmeldung lehrt darüber hinaus, dass stabile Isocyanat-Produkte nicht durch Vorvermischung von 2-Ring-MDI mit PMDI-Zusammensetzungen und anschließender Isocyanuratbildung zugänglich seien.

Die im Stand der Technik bekannten diskontinuierlichen Verfahren zur Herstellung von Isocyanurat-haltigen Isocyanat-Mischungen erfordern im Allgemeinen den Einsatz eines chemischen Abstoppers zum Abbrechen der Trimerisierungsreaktion beim gewünschten Trimerisierungsgrad. Ferner kann die Temperaturkontrolle bei diskontinuierlich durchgeführten exothermen Reaktionen insbesondere im industriellen Maßstab eine Herausforderung darstellen. Die bekannten Verfahren zur Herstellung von Isocyanurat-haltigen Isocyanat-Mischungen können ferner zu einem erhöhten Gehalt an dimerem Isocyanat (dem sog. Uretdion) führen, was eine Trübung des Endprodukts zur Folge hat.

Die deutsche Patentanmeldung DE 10 2004 060 121 A1 befasst sich mit der Aufgabe, ein kontinuierliches Verfahren zur Herstellung von isocyanuratgruppenhaltigen Polyisocyanaten zur Verfügung zu stellen, mit dem ein Polyisocyanat mit einer geringen Farbzahl erhalten werden kann. Zur Lösung dieser Aufgabe wird ein kontinuierlich betriebenes Verfahren zur partiellen Oligomerisierung von Isocyanaten, und zwar insbesondere von 1,6-Hexamethylendiisocyanat, Isophorondiisocyanat, Dicyclohexylmethan-4,4'-diisocyanat, 2,2,4- und/oder 2,4,4-Trimethyl-1,6-hexamethylendiisocyanat und Gemischen davon, in Gegenwart mindestens eines Katalysators vorgeschlagen, das insbesondere dadurch gekennzeichnet ist, dass der Gesamtgehalt des Katalysators an hydrolysierbarem Halogenen weniger als 1 Gew.-% beträgt.

Die gegebenenfalls in einer *Stufe a)* vorvermischten isocyanat- und katalysatorhaltigen Eduktströme werden in einer *Stufe b)* durch eine Reaktionszone geführt. Der Stufe b) kann sich optional eine Nachreaktion in einem Rohrreaktor (*Stufe c)*) anschließen. Bevorzugt wird die Reaktion nach Erreichen des gewünschten Umsetzungsgrades in einer *Stufe d)* durch Desaktivierung des Katalysators, beispielsweise durch Zugabe eines Desaktivierungsmittels, durch thermische Zersetzung des Katalysators oder durch Abkühlen gestoppt.

In der Regel besteht die Stufe b) aus zwei oder mehr rückvermischten Reaktionszonen. Im Allgemeinen liegt die Temperatur im rückvermischten Reaktorsystem zwischen 40 °C und 170 °C, bevorzugt zwischen 45 °C und 160 °C, besonders bevorzugt zwischen 50 °C und 150 °C und ganz besonders bevorzugt zwischen 60 °C und 140 °C. In einer besonderen Ausführungsform der Stufe b) werden die einzelnen Reaktionszonen unterschiedlich temperiert und mit unterschiedlichen Verweilzeiten betrieben. Hierzu wird offenbart, es könne beispielsweise sinnvoll sein, die Reaktionstemperatur entlang der Reaktionszonen anzuheben, sodass beispielsweise die Temperatur in der zweiten Reaktionszone um 5 °C, bevorzugt um 10 °C, besonders bevorzugt um 15 °C und ganz besonders bevorzugt um 20 °C höher liege als in der ersten Reaktionszone. Ferner könne in einer gegebenenfalls vorhandenen dritten Reaktionszone die Temperatur weiter um 5 °C, bevorzugt um 10 °C, besonders bevorzugt um 15 °C und ganz besonders bevorzugt um 20 °C erhöht werden. Dabei könne es sinnvoll sein, diese letzte Reaktionszone auf eine Temperatur oberhalb von 80 °C, bevorzugt 100 °C, besonders bevorzugt 120 °C zu erhitzen, um den Katalysator **thermisch** zu desaktivieren. Als *Alternative dazu* wird eine Ausführungsform offenbart, in welcher dieser dritte Abschnitt nicht weiter erhitzt, sondern auf eine Temperatur unterhalb von 50 °C, bevorzugt 45 °C, besonders bevorzugt 40 °C **abgekühlt** wird, um die Reaktion zu stoppen. In diesen Fällen entfällt der Schritt c) (da der Schritt d) bereits in der letzten Stufe von Schritt b) durchgeführt wird). Als Beispiel (hinsichtlich der Temperaturbedingungen an die erforderlichen Bedingungen für das zu trimerisierende Diisocyanat anzupassen) für eine Verfahrensführung unter Desaktivierung *durch Abkühlen* wird offenbart, die erste Reaktionszone in eine Misch- und/oder Vorwärmzone (zweckmäßigerweise mit einer Temperatur von ca. 40 °C bis 60 °C), die zweite in eine Reaktionszone (zweckmäßigerweise mit einer Temperatur von ca. 70 °C bis 120 °C) und die letzte in eine Katalysator-Desaktivierungs- oder Abkühlzone (zweckmäßigerweise mit einer Temperatur von ca. 20 °C bis 40 °C) aufzuteilen.

Auch dieses kontinuierliche Verfahren ist nicht frei von Nachteilen. So ist etwa die besonders bevorzugte Temperatur für thermische Katalysatordeaktivierung von 120 °C zu gering, um niedrige Uretdiongehalte sicher gewährleisten zu können. Eine *Kombination* aus kontinuierlicher thermischer Deaktivierung bei hinreichend hoher Temperatur und sich daran anschließender hinreichend rascher kontinuierlicher Abkühlung ist dieser Schrift nicht zu entnehmen.

Weitere Verbesserungen auf diesem Gebiet der Technik wären daher wünschenswert. Insbesondere wäre es wünschenswert, ein Verfahren zur Herstellung von Isocyanurat-haltigen Isocyanat-Mischungen zur Verfügung zu haben, dass die zuvor genannten Probleme nicht oder zumindest in verringertem Umfang aufweist und zu lagerstabilen, flüssigen, homogenen (nicht getrübten) Produkten führt. Vollkommen überraschend wurde gefunden, dass eine kontinuierliche Verfahrensführung unter Anwendung mehrerer Temperaturniveaus wie nachstehend beschrieben diesbezüglich Abhilfe schaffen kann.

Dem vorstehend Gesagten Rechnung tragend betrifft die Erfindung ein **Verfahren zur Herstellung einer Isocyanurat-haltigen Isocyanat-Mischung**, umfassend die Schritte:

a) Kontinuierliches Bereitstellen einer Isocyanatgruppen-Trimerisierungskatalysator umfassenden Isocyanat-Mischung durch Vermischen einer ersten Isocyanat-Komponente (K1), einer zweiten, von der ersten verschiedenen Isocyanat-Komponente (K2) und eines Isocyanatgruppen-Trimerisierungskatalysators (K3) **(Vermischungsschritt);**

b) Kontinuierliches Führen der in Schritt a) bereitgestellten, Isocyanatgruppen-Trimerisierungskatalysator umfassenden Isocyanat-Mischung durch eine erste Verweilzeitzone bei einer Temperatur im Bereich von 50 °C bis 120 °C, bevorzugt von 60 °C bis 110°C, besonders bevorzugt von 70 °C bis 100 °C, unter Erhalt einer Isocyanatgruppen-Trimerisierungskatalysator umfassenden, Uretdion- und Isocyanurat-haltigen Isocyanat-Mischung (**Trimerisierungsschritt**);

c) Kontinuierliches Führen der in Schritt b) erhaltenen, Isocyanatgruppen-Trimerisierungskatalysator umfassenden Uretdion- und Isocyanurat-haltigen Isocyanat-Mischung durch eine zweite Verweilzeitzone bei einer Temperatur im Bereich von 160 °C bis 220 °C, bevorzugt von 170 °C bis 215 °C, besonders bevorzugt von 180 °C bis 210 °C,

unter Erhalt einer (inaktiven Isocyanatgruppen-Trimerisierungskatalysator umfassenden) Isocyanurat-haltigen Isocyanat-Mischung, wobei dem Führen durch die zweite Verweilzeitzone die Zugabe eines Abstoppers bei einer Temperatur im Temperaturbereich von Schritt b) vorausgehen kann (**Inaktivierungs- und Rückspaltungsschritt**);

d) Kontinuierliches Führen der in Schritt c) erhaltenen (inaktiven Isocyanatgruppen-Trimerisierungskatalysator umfassenden) Isocyanurat-haltigen Isocyanat-Mischung durch eine dritte Verweilzeitzone bei einer Temperatur im Bereich von 10 °C bis 100 °C, bevorzugt von 15 °C bis 80 °C, besonders bevorzugt von 20 °C bis 50 °C, unter Erhalt der angestrebten (inaktiven Isocyanatgruppen-Trimerisierungskatalysator umfassenden) Isocyanurat-haltigen Isocyanat-Mischung (**"Abschreck"-Schritt**).

Im erfindungsgemäßen Verfahren werden die Verfahrensschritte a) bis d) *kontinuierlich* durchgeführt. Damit ist im vorliegenden Zusammenhang gemeint, dass während des Zeitraums der Produktion einer angestrebten Isocyanurat-haltigen Isocyanat-Mischung die Ausgangsmaterialien eines Verfahrensschrittes demselben kontinuierlich zugeführt und die Produkte des jeweiligen Verfahrensschrittes demselben kontinuierlich entnommen werden. Dies umfasst eine Produktion diskreter Chargen einer angestrebten Isocyanurat-haltigen Isocyanat-Mischung. Beispielsweise kann eine Charge einer bestimmten Isocyanurat-haltigen Isocyanat-Mischung so lange kontinuierlich produziert werden, bis die gewünschte Menge in einen oder mehrere Behälter abgefüllt wurde, woran sich die Produktion einer anderen Isocyanurat-haltigen Isocyanat-Mischung anschließen kann. Diese Vorgehensweise ist vom erfindungsgemäßen Gebrauch des Begriffs *kontinuierlich* umfasst, und zwar unabhängig davon, ob zwischen den beiden Produktionszyklen eine signifikante Produktionsunterbrechung liegt oder nicht.

Zwei Isocyanat-Komponenten (K1, K2) sind im Sinne der vorliegenden Erfindung *voneinander verschieden*, wenn sie in mindestens einem Parameter ausgewählt aus dem gemäß DIN EN ISO 11909:2007-05 bestimmten NCO-Gehalt und der mittels Rotationsviskosimeter gemäß DIN 53019-1:2008-09 bestimmten Viskosität bei 40 °C unterschiedlich sind (unter Berücksichtigung unvermeidbarer Messwertschwankungen).

Im Sinne der vorliegenden Erfindung werden unter *Isocyanatgruppen-Trimerisierungskatalysatoren* alle Katalysatoren verstanden, die in der Lage sind, unter den Temperatur-bedingungen von Schritt b) die Trimerisierung von Isocyanatgruppen zu Isocyanuratgruppen (siehe Schema 1 weiter oben) zu katalysieren. Von einem *inaktiven Isocyanatgruppen-Trimerisierungskatalysator* wird im Sinne der vorliegenden Erfindung gesprochen, wenn der Katalysator unter den jeweiligen Temperaturbedingungen die Trimerisierung von Isocyanatgruppen zu Isocyanuratgruppen nicht mehr katalysiert. Besonders bevorzugt ist es, die Wahl des Isocyanatgruppen-Trimerisierungskatalysators und der Temperaturbedingungen in Schritt c) so aufeinander abzustimmen, dass der Isocyanatgruppen-Trimerisierungskatalysator *irreversibel* deaktiviert wird.

Es folgt zunächst eine Kurzzusammenfassung verschiedener möglicher **Ausführungsformen der Erfindung,** wobei die Aufzählung an Ausführungsformen nicht als erschöpfend anzusehen ist:

In einer **ersten Ausführungsform** der Erfindung umfasst Schritt a) das kontinuierliche Eintragen der ersten Isocyanat-Komponente (K1), der zweiten, von der ersten verschiedenen Isocyanat-Komponente (K2) und des Isocyanatgruppen-Trimerisierungskatalysators (K3) in eine Mischeinrichtung und Vermischen der eingetragenen Isocyanat-Komponenten (K1, K2) und des eingetragenen Trimerisierungskatalysators (K3) unter Erhalt der Isocyanatgruppen-Trimerisierungskatalysator umfassenden Isocyanat-Mischung.

In einer **zweiten Ausführungsform** der Erfindung umfasst Schritt a) folgende Teilschritte:

a.1) Kontinuierliches Eintragen einer der beiden Isocyanat-Komponenten (K1, K2) und des Isocyanatgruppen-Trimerisierungskatalysators (K3) in eine erste Mischeinrichtung (M1) und Vermischen der eingetragenen Isocyanat-Komponente und des eingetragenen Isocyanatgruppen-Trimerisierungskatalysators (K3) unter Erhalt einer eine der beiden Isocyanat-Komponenten (K1, K2) und den Isocyanatgruppen-Trimerisierungskatalysator (K3) enthaltenden Mischung;

a.2) Kontinuierliches Eintragen der in Schritt a.1) erhaltenen, eine der beiden Isocyanat-Komponenten (K1, K2) und den Isocyanatgruppen-Trimerisierungskatalysator (K3) enthaltenden Mischung und der anderen Isocyanat-Komponente in eine zweite Mischeinrichtung (M2) und Vermischen der eingetragenen eine der beiden Isocyanat-Komponenten (K1, K2) und den Isocyanatgruppen-Trimerisierungskatalysator (K3) enthaltenden Mischung und der eingetragenen anderen Isocyanatgruppen-Komponente unter Erhalt der Isocyanatgruppen-Trimerisierungskatalysator umfassenden Isocyanat-Mischung.

In einer **dritten Ausführungsform** der Erfindung umfasst Schritt a) die folgenden Teilschritte:

a.1) Kontinuierliches Eintragen der ersten Isocyanat-Komponente (K1) und der zweiten, von der ersten verschiedenen Isocyanat-Komponente (K2) in eine erste Mischeinrichtung (M1) und Vermischen der eingetragenen Isocyanat-Komponenten in dieser ersten Mischeinrichtung (M1) unter Erhalt einer Isocyanat-Mischung;

a.2) Kontinuierliches Eintragen der Isocyanatgruppen-Trimerisierungskatalysators (K3) und des in Schritt a.1) erhaltenen Isocyanat-Mischung in eine zweite Mischeinrichtung (M2) und Vermischen der eingetragenen Isocyanat-Mischung und des eingetragenen Isocyanatgruppen-Trimerisierungskatalysators (K3) unter Erhalt der Isocyanatgruppen-Trimerisierungskatalysator umfassenden Isocyanat-Mischung.

In einer **vierten Ausführungsform** der Erfindung, die eine besondere Ausgestaltung der dritten Ausführungsform ist, wird in Schritt a) die die Mischeinrichtung (M1) kontinuierlich verlassende Isocyanat-Mischung vor deren Eintragen in die zweite Mischeinrichtung (M2) durch eine der zweiten Mischeinrichtung (M2) vorgeschaltete ("nullte") Verweilzeitzone geführt.

In einer **fünften Ausführungsform** der Erfindung, die mit allen anderen Ausführungsformen kombiniert werden kann, wird Schritt a) bei einer Temperatur im Bereich von 10 °C bis < 50 °C durchgeführt.

In einer **sechsten Ausführungsform** der Erfindung die mit allen anderen Ausführungsformen, insbesondere jedoch mit der fünften Ausführungsform, kombiniert werden kann, wird die Temperatur der in Schritt a) erhaltenen Isocyanatgruppen-Trimerisierungskatalysator umfassenden Isocyanat-Mischung mit einer Geschwindigkeit der Temperaturänderung im Bereich von 2 °C/min bis 90 °C/min, bevorzugt von 5 °C/min bis 60 °C/min, besonders bevorzugt von 15 °C/min bis 55 °C/min auf die Temperatur in Schritt b) eingestellt.

In einer **siebten Ausführungsform** der Erfindung die mit allen anderen Ausführungsformen, insbesondere jedoch mit der sechsten Ausführungsform, kombiniert werden kann, wird die Temperatur der in Schritt b) erhaltenen Isocyanatgruppen-Trimerisierungskatalysator, Uretdion- und Isocyanurat-haltigen umfassenden Isocyanat-Mischung mit einer Geschwindigkeit der Temperaturänderung im Bereich von 10 °C/min bis 160 °C/min, bevorzugt von 10 °C/min bis 100 °C/min, besonders bevorzugt von 25 °C/min bis 85 °C/min, auf die Temperatur in Schritt c) eingestellt.

In einer **achten Ausführungsform** der Erfindung die mit allen anderen Ausführungsformen, insbesondere jedoch mit der siebten Ausführungsform, kombiniert werden kann, wird die Temperatur der in Schritt c) erhaltenen inaktiven Isocyanatgruppen-Trimerisierungskatalysator, Isocyanurat-haltigen umfassenden Isocyanat-Mischung mit einer Geschwindigkeit der Temperaturänderung im Bereich von 15 °C/min bis 200 °C/min, bevorzugt im Bereich von 15 °C/min bis 125 °C/min, besonders bevorzugt im Bereich von 35 °C/min bis 105 °C/min, auf die Temperatur in Schritt d) eingestellt.

In einer **neunten Ausführungsform** der Erfindung die mit allen anderen Ausführungsformen kombiniert werden kann, werden Art und Zusammensetzung der ersten und der zweiten Isocyanat-Komponente jeweils so aufeinander abgestimmt, dass die in Schritt d) erhaltene Isocyanurat-haltige Isocyanat-Mischung einen NCO-Gehalt im Bereich von 24 Massen-% bis 32 Massen-% und eine Viskosität im Bereich von 50 mPa · s (25 °C) bis 40.000 mPa · s (25 °C) aufweist.

In einer **zehnten Ausführungsform** der Erfindung die mit allen anderen Ausführungsformen, insbesondere jedoch mit der neunten Ausführungsform, kombiniert werden kann, wird die erste Isocyanat-Komponente (K1) und zweite Isocyanat-Komponente (K2) jeweils ausgewählt aus der Gruppe bestehend aus (i) Methylen-Diphenylen-Diisocyanat, (ii) Gemischen aus Methylen-Diphenylen-Diisocyanat und Polymethylen-Polyphenylen-Polyisocyanat, (iii) Toluylendiisocyanat und (iv) Mischungen aus (i) oder (ii) mit (iii).

In einer **elften Ausführungsform** der Erfindung, die eine besondere Ausgestaltung der zehnten Ausführungsform ist, wird als erste Isocyanat-Komponente (K1) Methylen-Diphenylen-Diisocyanat und als zweite Isocyanatkomponente (K2) ein Gemisch aus Methylen-Diphenylen-Diisocyanat und Polymethylen-Polyphenylen-Polyisocyanat eingesetzt.

In einer **zwölften Ausführungsform** der Erfindung, die eine besondere Ausgestaltung der elften Ausführungsform ist, wird das Massenverhältnis von Methylen-Diphenylen-Diisocyanat zu Polymethylen-Polyphenylen-Polyisocyanat in der Mischung aus erster und zweiter Isocyanat-Komponente auf einen Wert im Bereich von 70 : 30 bis 95 : 5 (also 2,33 bis 19) eingestellt.

In einer **dreizehnten Ausführungsform** der Erfindung, die eine besondere Ausgestaltung der zehnten bis zwölften Ausführungsform ist, liegt der NCO-Gehalt der ersten Isocyanat-Komponente (K1) und der zweiten Isocyanat-Komponente (K2) jeweils im Bereich von 30 Massen-% bis 49 Massen-%, und die Viskosität der ersten Isocyanat-Komponente (K1) und der zweiten Isocyanat-Komponente (K2) liegt jeweils im Bereich von 2,50 mPa · s bis 800 mPa · s (40 °C).

In einer **vierzehnten Ausführungsform** der Erfindung, die eine besondere Ausgestaltung der ersten bis dreizehnten Ausführungsform ist, wird der in Schritt a) eingesetzte Isocyanatgruppen-Trimerisierungskatalysator ausgewählt aus der Gruppe bestehend aus quarternären Ammoniumhydroxiden, Alkalimetallhydroxiden, Alkalimetallalkoxiden, Trialkylphosphinen, in para-Position substituierten Pyridinen, metallorganischen Salzen, Lewis-Säuren und Alkalimetallsalzen organischer Säuren.

In einer **fünfzehnten Ausführungsform** der Erfindung, die eine besondere Ausgestaltung der vierzehnten Ausführungsform ist, wird in Schritt c) ein Abstopper zugegeben, der ein organisches Säurechlorid umfasst, wobei das organische Säurechlorid in einem molaren Verhältnis von Säurechlorid: Isocyanatgruppen-Trimerisierungskatalysator

im Bereich von 1 : 3 bis 1 : 1 eingesetzt wird.

In einer **sechzehnten Ausführungsform** der Erfindung, die eine andere besondere Ausgestaltung der ersten bis dreizehnten Ausführungsform ist, umfasst der in Schritt a) eingesetzte Isocyanatgruppen-Trimerisierungskatalysator ein Alkylaminoalkylphenol, bevorzugt Tris(dimethylaminomethyl)-phenol, und ist insbesondere ein Alkylaminoalkylphenol, bevorzugt Tris(dimethylaminomethyl)-phenol.

In einer **siebzehnten Ausführungsform** der Erfindung, die eine besondere Ausgestaltung der sechzehnten Ausführungsform ist, wird zur Inaktivierung des Isocyanatgruppen-Trimerisierungskatalysators kein Abstopper eingesetzt (d. h. die Inaktivierung erfolgt rein thermisch).

In einer **achtzehnten Ausführungsform** der Erfindung, die eine besondere Ausgestaltung der vierten bis siebzehnten Ausführungsform ist, wird als der zweiten Mischeinrichtung (M2) vorgeschaltete "nullte" Verweilzeitzone ein Rohrreaktor, der optional Mischelemente enthält, eingesetzt.

In einer **neunzehnten Ausführungsform** der Erfindung, die mit allen anderen Ausführungsformen kombiniert werden kann, welche keine dynamischen Mischeinrichtungen für Schritt a) vorsehen, werden in Schritt a) nur statische Mischeinrichtungen eingesetzt werden.

In einer **zwanzigsten Ausführungsform** der Erfindung, die mit allen anderen Ausführungsformen kombiniert werden kann, umfasst die erste, zweite und dritte Verweilzeitzone jeweils einen Rührkessel, optional mit vorgeschaltetem Wärmeaustauscher, oder einen temperierbaren Rohrreaktor, der optional Mischelemente enthält.

In einer **einundzwanzigsten Ausführungsform** der Erfindung, die eine besondere Ausgestaltung der zwanzigsten Ausführungsform ist, umfasst die erste, zweite und dritte Verweilzeitzone jeweils einen Rührkessel, optional mit vorgeschaltetem Wärmeaustauscher.

In einer **zweiundzwanzigsten Ausführungsform** der Erfindung, die eine andere besondere Ausgestaltung der zwanzigsten Ausführungsform ist, umfasst die erste, zweite und dritte Verweilzeitzone jeweils einen temperierbaren Rohrreaktor, der optional Mischelemente enthält.

In einer **dreiundzwanzigsten Ausführungsform** der Erfindung, die mit allen anderen Ausführungsformen außer der nachfolgend beschriebenen vierundzwanzigsten Ausführungsform kombiniert werden kann, werden die erste und die zweite Isocyanat-Komponente jeweils einem Produktstrom der entsprechenden Isocyanat-Produktionsanlage entnommen.

In einer **vierundzwanzigsten Ausführungsform** der Erfindung, die mit allen anderen Ausführungsformen außer der vorstehend beschriebenen dreiundzwanzigsten Ausführungsform kombiniert werden kann, werden die erste und die zweite Isocyanat-Komponente jeweils einem Lagerungs- oder Transportbehälter entnommen, der nicht an die entsprechenden Isocyanat-Produktionsanlage angebunden ist.

Die zuvor kurz geschilderten Ausführungsformen und weitere mögliche Ausgestaltungen der Erfindung werden im Folgenden näher erläutert. Verschiedene Ausführungsformen sind, sofern sich aus dem Kontext für den Fachmann nicht eindeutig das Gegenteil ergibt, beliebig miteinander kombinierbar.

Das *kontinuierliche Bereitstellen einer Isocyanatgruppen-Trimerisierungskatalysator umfassenden Isocyanat-Mischung durch Vermischen einer ersten Isocyanat-Komponente (K1), einer zweiten, von der ersten verschiedenen Isocyanat-Komponente (K2) und eines Isocyanatgruppen-Trimerisierungskatalysators (K3)* in **Schritt a)** - dem **Vermischungsschritt** - kann grundsätzlich auf alle dem Fachmann geläufige Arten erfolgen.

α) Es ist möglich, die zu vermischenden Komponenten - die erste Isocyanat-Komponente (K1), die zweite, von der ersten verschiedene Isocyanat-Komponente (K2) und den Isocyanatgruppen-Trimerisierungskatalysator (K3) - kontinuierlich in eine Mischeinrichtung einzutragen, zu vermischen und anschließend direkt dem Schritt b) zuzuführen.

(3) Es ist ebenfalls möglich, zunächst eine der beiden Isocyanat-Komponenten (K1 oder K2) mit dem Isocyanatgruppen-Trimerisierungskatalysator (K3) kontinuierlich in einer ersten Mischeinrichtung (M1) zu vermischen und die andere Isocyanat-Komponente mit der so erhaltenen Mischung aus einer der Isocyanat-Komponenten und dem Isocyanatgruppen-Trimerisierungskatalysator (K3) *in einer zweiten Mischeinrichtung (M2)*, die der ersten Mischeinrichtung (M1) strömungstechnisch nachgeschaltet ist, kontinuierlich zu mischen. In dieser Ausführungsform geschieht daher *das kontinuierliche Bereitstellen einer Isocyanatgruppen-Trimerisierungskatalysator umfassenden Isocyanat-Mischung durch Vermischen einer ersten Isocyanat-Komponente (K1), einer zweiten, von der ersten verschiedenen Isocyanat-Komponente (K2) und eines Isocyanatgruppen-Trimerisierungskatalysators (K3)* durch die Schritte:

a.1) Kontinuierliches Eintragen einer der beiden Isocyanat-Komponenten (K1, K2) und des Isocyanatgruppen-Trimerisierungskatalysators (K3) in eine erste Mischeinrichtung (M1) und Vermischen der eingetragenen Isocyanat-Komponente und des eingetragenen Isocyanatgruppen-Trimerisierungskatalysators (K3) unter Erhalt einer eine der beiden Isocyanat-Komponenten (K1, K2) und den Isocyanatgruppen-Trimerisierungskatalysator (K3) enthaltenden Mischung;

a.2) Kontinuierliches Eintragen der in Schritt a.1) erhaltenen, eine der beiden Isocyanat-Komponenten (K1, K2) und den Isocyanatgruppen-Trimerisierungskatalysator (K3) enthaltenden Mischung und der anderen Isocyanat-Komponente in eine zweite Mischeinrichtung (M2) und Vermischen der eingetragenen eine der beiden Isocyanat-Komponenten (K1, K2) und den Isocyanatgruppen-Trimerisierungskatalysator (K3) enthaltenden Mischung und der eingetragenen anderen Isocyanatgruppen-Komponente unter Erhalt der Isocyanatgruppen-Trimerisierungskatalysator umfassenden Isocyanat-Mischung.

γ) Eine andere, ebenfalls zweistufige Ausführungsform des Schrittes a) beinhaltet die Vermischung *zunächst der beiden Isocyanatkomponenten (K1, K2)* in einer ersten Mischeinrichtung (M1), gefolgt von kontinuierlicher Vermischung des Isocyanatgruppen-Trimerisierungskatalysator (K3) mit der so erhaltenen Isocyanat-Mischung in einer zweiten Mischeinrichtung (M2), die der ersten Mischeinrichtung (M1) strömungstechnisch nachgeschaltet ist. In dieser Ausführungsform geschieht daher *das kontinuierliche Bereitstellen einer Isocyanatgruppen-Trimerisierungskatalysator umfassenden Isocyanat-Mischung durch Vermischen einer ersten Isocyanat-Komponente (K1), einer zweiten, von der ersten verschiedenen Isocyanat-Komponente (K2) und eines Isocyanatgruppen-Trimerisierungskatalysators (K3)* durch die Schritte:

a.1) Kontinuierliches Eintragen der ersten Isocyanat-Komponente (K1) und der zweiten, von der ersten verschiedenen Isocyanat-Komponente (K2) in eine erste Mischeinrichtung (M1) und Vermischen der eingetragenen Isocyanat-Komponenten in dieser ersten Mischeinrichtung (M1) unter Erhalt einer Isocyanat-Mischung;

a.2) Kontinuierliches Eintragen eines Isocyanatgruppen-Trimerisierungskatalysators (K3) und der in Schritt a.1) erhaltenen Isocyanat-Mischung in eine zweite Mischeinrichtung (M2) und Vermischen der eingetragenen Isocyanat-Mischung und des eingetragenen Isocyanatgruppen-Trimerisierungskatalysators (K3) unter Erhalt der Isocyanatgruppen-Trimerisierungskatalysator umfassenden Isocyanat-Mischung.

Die letztgenannte Vorgehensweise (γ) ist bevorzugt, denn sie hat den Vorteil, dass der Isocyanatgruppen-Trimerisierungskatalysator (K3) erst dann zugegeben wird, wenn die gewünschte Mischung aus Isocyanaten bereits vorliegt, sodass eine Trimerisierung einer der Isocyanat-Komponenten alleine sicher ausgeschlossen werden kann. Die Zeichnungen **FIG. 1 bis FIG. 3** zeigen mögliche apparative Ausgestaltungen dieser Ausführungsform.

Es kann sinnvoll sein, zwischen dem letzten Mischvorgang in Schritt a) und dem Schritt b) und/oder, sofern durchgeführt, zwischen Schritt a1) und Schritt a2), weitere Verweilzeit zur Vervollständigung der Durchmischung zur Verfügung zu stellen. Dies kann geschehen, indem die Verweilzeit in der Mischeinrichtung erhöht wird, etwa durch Verringerung der Strömungsgeschwindigkeit durch die Mischeinrichtung hindurch oder bevorzugt durch - bei gegebener Strömungsgeschwindigkeit - Verlängerung des Wegs der Mischung durch die Mischeinrichtung hindurch, indem diese hinreichend groß ausgestaltet wird oder mehrere Mischeinrichtungen hintereinandergeschaltet werden. Es ist auch möglich, weitere Verweilzeit durch das Durchlaufen eines der Mischeinrichtung nachgeschalteten Verweilzeitapparats bereitzustellen.

Das Bereitstellen weiterer Verweilzeit kann gegebenenfalls nach jeder Vermischung zweier Komponenten sinnvoll sein, insbesondere ist diese Ausführungsform jedoch in der Ausführungsform γ) zwischen den Schritten a.1) und a.2) bevorzugt. Dabei wird bevorzugt die die Mischeinrichtung (M1) kontinuierlich verlassende Isocyanat-Mischung vor deren Eintragen in die zweite Mischeinrichtung (M2) durch eine der zweiten Mischeinrichtung (M2) vorgeschaltete ("nullte") Verweilzeitzone, die bevorzugt ein Rohrreaktor ist, der optional Mischelemente enthält, geführt.

In jedem Fall ist es bevorzugt, Schritt a) bei einer Temperatur im Bereich von 10 °C bis < 50 °C, bevorzugt von 15 °C bis 45 °C, besonders bevorzugt von 20 °C bis 40 °C, durchzuführen. Umfasst Schritt a) mehrere Teilschritte, so gilt dies für jeden der Teilschritte (inklusive der gegebenenfalls durchlaufenden "nullten" Verweilzeitzone). Durch die Einhaltung der genannten Temperaturbereiche wird ein Einsetzen der Trimerisierungsreaktion bereits in Schritt a) weitgehend bis vollständig vermieden, sodass die Trimerisierung im Wesentlichen erst in Schritt b) unter kontrollierten Bedingungen stattfindet. Ein Beginn der Trimerisierung bereits in Schritt a) sollte möglichst vermieden werden, um kontrollierte Reaktionsbedingungen sicherzustellen.

Als in Schritt a) einzusetzende *Isocyanatgruppen-Trimerisierungskatalysator (K3)* eignen sich vorzugsweise quarternäre Ammoniumhydroxide, Alkalimetallhydroxide, Alkalimetallalkoxide, Trialkylphosphine, Alkylaminoalkylphenole, in para-Position substituierte Pyridine, metallorganische Salze, Lewis-Säuren und Alkalimetallsalze organischer Säuren. Der Isocyanatgruppen-Trimerisierungs¬katalysator (K3) wird bevorzugt in Form einer Lösung eines Massenanteils an Isocyanatgruppen-Trimerisierungs¬katalysator (K3) im Bereich von 5 bis 15 (bezogen auf die Gesamtmasse der Lösung (vgl. Beispiel 1 und 2)) in einem nicht gegenüber Isocyanaten reaktiven Lösungsmittel eingesetzt, so dass ein molares Verhältnis von Isocyanatgruppen-Trimerisierungskatalysator zu Isocyanaten im Bereich von 0,05 : 99,95 bis 0,50 : 99,50 erreicht wird.

Besonders bevorzugt ist der Einsatz von Alkylaminoalkylphenolen, da diese in Schritt c) auch ohne Einsatz

eines Abstoppers irreversibel deaktiviert werden und daher unerwünschte Folgereaktionen vermieden werden. Hier ist insbesondere Tris(dimethylaminomethyl)-phenol zu nennen.

Als in Schritt a) einzusetzende *Mischeinrichtungen* eignen sich grundsätzliche alle dem Fachmann bekannten Mischeinrichtungen. Es können sowohl statische Mischeinrichtungen (bei denen die Vermischung mindestens zweier Flüssigkeitsströme ohne bewegliche Teile bewirkt wird) als auch dynamische Mischeinrichtungen (bei denen die Vermischung mindestens zweier Flüssigkeitsströme unter Verwendung beweglicher Teile bewirkt wird) zum Einsatz kommen.

Beispiele für geeignete dynamische Mischeinrichtungen sind Rührkessel und Rotor-Stator-Mischer. Dynamische Mischeinrichtungen können beispielsweise von den Firmen Cavitron Verfahrenstechnik, BWS Technologie GmbH und Kinematica bezogen werden; bekannte Bezeichnungen sind Cavitron®, Supratron® und Megatron®. Beispiele für geeignete statische Mischeinrichtungen sind Mischrohre mit statischen Mischeinbauten, wobei auch Mikrostrukturen zum Einsatz kommen können. Mischrohre mit statischen Mischeinbauten werden häufig einfach "Statikmischer" genannt. Solche statischen Mischeinrichtungen können beispielsweise von den Firmen Sulzer, Fluitec, Stamixco und Ehrfeld Mikrotechnik bezogen werden. Bekannte Bezeichnungen sind SMX-, Kenics-, CMX- und Mikro-Mischer.

Kommen in Schritt a) zwei Mischeinrichtungen zum Einsatz (*Ausführungsformen β) und γ)*), können sowohl beide Mischeinrichtungen dynamische Mischeinrichtungen als auch statische Mischeinrichtungen sein. Es ist auch möglich, dass die erste Mischeinrichtung (M1) eine dynamische Mischeinrichtung und die zweite Mischeinrichtung (M2) eine statische Mischeinrichtung ist, oder die erste Mischeinrichtung (M1) eine statische Mischeinrichtung und die zweite Mischeinrichtung (M2) eine dynamische Mischeinrichtung ist.

Statische Mischeinrichtungen sind bevorzugt, weil sie eine gute Quervermischung aufweisen. Dadurch werden eine enge Verweilzeitverteilung sowie ein verbesserter Wärmeübergang bewirkt. **FIG. 1** zeigt zwei Möglichkeiten des Einsatzes eines Statikmischers in Schritt a.2) in der am stärksten bevorzugten Ausführungsform γ): Die in Schritt a.1) erhaltene Isocyanat-Mischung (K1+K2) wird über einen Statikmischer (M2) mit dem Isocyanatgruppen-Trimerisierungs¬katalysator (K3) (bevorzugt als Lösung wie oben beschrieben) vermischt. Dabei können die beiden Flüssigkeitsströme über ein T-Stück in den Mischer gelangen (FIG. 1, linke Hälfte; Z3 bezeichnet die Zuleitung für K3 und Z1,Z2 die Zuleitung für die Mischung aus K1+K2) oder die Flüssigkeitsströme können dem Mischer von der Seite zugeführt werden (FIG. 1, rechte Hälfte). In einem weiteren bevorzugten Verfahren ist eine Vermischung der beiden Flüssigkeitsströme mit gleicher oder zumindest ähnlicher Strömungsgeschwindigkeit bevorzugt, da es ansonsten zu einer schlechteren Durchmischung kommen kann, was erhöhte Nebenprodukt- und Belagbildung zur Folge haben kann. Da die Volumenströme an Isocyanat-Mischung und Isocyanatgruppen-Trimerisierungs¬katalysator (K3) stark unterschiedlich sind, ist es bevorzugt, den Innendurchmesser der zum Statikmischer führenden Rohrleitung für den Katalysatorstrom im Vergleich zum Innendurchmesser der entsprechenden Rohrleitung für den Strom an Isocyanat-Mischung zu reduzieren (in **FIG. 2** sind beispielhaft zwei Möglichkeiten für Schritt a.2) der Ausführungsform γ) gezeigt). Dabei ist es möglich, die Rohrleitung mit dem kleineren Durchmesser - K3 - von der mit dem größeren Durchmesser - Isocyanat-Mischung K1+K2 - umhüllen zu lassen, wie in der linken Hälfte von FIG. 2 gezeigt.

In einer weiteren bevorzugten Ausführungsform der erfindungsgemäßen Verfahrens wird der Strom der Isocyanat-Mischung K1+K2 vor dem Mischer aufgeteilt und von zwei Seiten seitlich in den Mischer geleitet. Von einer Seite des Mischers wird die Rohrleitung für den Katalysatorstrom K3 in die Rohrleitung der Isocyanat-Mischung eingeführt. Erst am Mischer treffen die drei Ströme zusammen. Dies ist in **FIG. 3** beispielhaft für Schritt a.2) der Ausführungsform γ) gezeigt. In den Beispielen 2 bis 4 wurde so verfahren.

Als in Schritt a) einzusetzender *erster und zweiter Isocyanat-Komponente (K1, K2)* eignen sich grundsätzlich alle trimerisierbaren organischen Isocyanate. Das erfindungsgemäße Verfahren eignet sich besonders zur Herstellung solcher Isocyanurat-haltigen Isocyanat-Mischungen mit einem NCO-Gehalt im Bereich von 24 Massen-% bis 32 Massen-% und einer Viskosität bei 25 °C im Bereich von 50 mPa · s bis 40.000 mPa · s. Als NCO-Gehalt gilt dabei der gemäß DIN EN ISO 11909:2007-05 bestimmte Wert. Als für die Viskosität maßgeblicher Wert gilt dabei der mittels Rotationsviskosimeter gemäß DIN 53019-1:2008-09 bestimmte Wert. Neben den Reaktionsparametern in weiteren Schritten (insbesondere der Temperatur in Schritt b)) hängen diese Werte von Art (ob zum Beispiel Methylen-Diphenylen-Diisocyanat, ein Gemisch aus Methylen-Diphenylen-Diisocyanat und Polymethylen-Polyphenylen-Polyisocyanat oder Toluylendiisocyanat eingesetzt wird) und Zusammensetzung (zum Beispiel Isomerenverhältnis, Mischungsverhältnis) der einzusetzenden Isocyanat-Komponenten ab, die entsprechend abgestimmt werden müssen, was für den Fachmann eine Routinehandlung ist. Als erste Isocyanat-Komponente (K1) wird bevorzugt eine Komponente mit einem NCO-Gehalt im Bereich von 30 Massen-% bis 49 Massen-% und einer Viskosität bei 40 °C im Bereich von 1,50 mPa · s bis 800 mPa · s eingesetzt. Als zweite Isocyanat-Komponente (K2) wird bevorzugt eine Komponente mit einem NCO-Gehalt im Bereich von 30 Massen-% bis 49 Massen-% und einer Viskosität bei 40 °C im Bereich von 2,50 mPa · s bis 800 mPa · s eingesetzt. Unter der Maßgabe, dass mindestens einer der Paramater *NCO-Gehalt* und *Viskosität* unterschiedlich ist, sind NCO-Gehalt und Viskosität der beiden Isocyanat-Komponenten innerhalb dieser Bereiche unabhängig voneinander einstellbar.

Geeignete Isocyanatkomponenten sind insbesondere die Di- und Polyisocyanate der Diphenylmethanreihe

sowie Toluylendiisocyanat. Diisocyanate der Diphenylmethanreihe sind die Isomeren des Methylen-Diphenylen-Diisocyanats (sog. *Monomer-MDI, MMDI,* auch als *2-Ring-MDI* bezeichnet). Polyisocyanate der Diphenylmethanreihe sind die höheren Homologen davon, die Polymethylen-Polyphenylen-Polyisocyanate, die drei oder mehr aromatische Ringe (und entsprechend 3 oder mehr Isocyanatgruppen) enthalten (sog. *Polymer-MDI*, *PMDI*). In der Praxis spielt PMDI nur im *Gemisch* mit MMDI eine Rolle, da reines PDMI eine für praktische Zwecke zu hohe Viskosität aufweist. Bevorzugt sind dabei Gemische aus Methylen-Diphenylen-Diisocyanat und Polymethylen-Polyphenylen-Polyisocyanat mit einem Massenverhältnis MMDI: PMDI im Bereich von 20 : 80 bis 55 : 45 (also im Bereich von 0,25 bis 1,22).

Die erste Isocyanat-Komponente (K1) ist also bevorzugt ausgewählt aus der Gruppe bestehend aus (i) Methylen-Diphenylen-Diisocyanat, (ii) Gemischen aus Methylen-Diphenylen-Diisocyanat und Polymethylen-Polyphenylen-Polyisocyanat, (iii) Toluylendiisocyanat und (iv) Mischungen aus (i) oder (ii) mit (iii). Die zweite Isocyanat-Komponente (K2) ist bevorzugt ebenfalls aus dieser Gruppe ausgewählt, mit der Maßgabe, dass die zweite Isocyanat-Komponente hinsichtlich Viskosität und/oder NCO-Gehalt von der ersten verschieden ist wie zuvor erläutert. Beispielsweise kann als erste Isocyanat-Komponente (K1) Methylen-Diphenylen-Diisocyanat und als zweite Isocyanat-Komponente (K2) Toluylendiisocyanat eingesetzt werden, oder es kann als erste Isocyanat-Komponente (K1) Toluylendiisocyanat und als zweite Isocyanat-Komponente (K2) ein Gemisch aus Methylen-Diphenylen-Diisocyanat und Polymethylen-Polyphenylen-Polyisocyanat eingesetzt werden. Es ist ebenfalls möglich, als erste und zweite Isocyanat-Komponente *jeweils* eine Methylen-Diphenylen-Diisocyanat-Komponente einzusetzen, welche sich aufgrund unterschiedlicher Isomerenverteilung in ihrer Viskosität unterscheiden.

Besonders bevorzugt wird in Schritt a) als erste Isocyanat-Komponente (K1) Methylen-Diphenylen-Diisocyanat und als zweite Isocyanatkomponente (K2) ein Gemisch aus Methylen-Diphenylen-Diisocyanat und Polymethylen-Polyphenylen-Polyisocyanat eingesetzt, wobei das Gemisch (K2) insbesondere ein Massenverhältnis MMDI: PMDI im Bereich von 20 : 80 bis 55 : 45 (also im Bereich von 0,25 bis 1,22) aufweist. Dabei ist es bevorzugt, dass das Massenverhältnis von MMDI: PMDI *in der Mischung* aus erster und zweiter Isocyanat-Komponente im Bereich von 70 : 30 bis 95 : 5 (also im Bereich von 2,33 bis 19) liegt.

In allen Ausführungsformen, in denen in Schritt a) ein Gemisch aus Methylen-Diphenylen-Diisocyanat und Polymethylen-Polyphenylen-Polyisocyanat eingesetzt wird, ist es bevorzugt, dass dieses Gemisch einen Gesamtchlorgehalt im Bereich von 500 ppm bis 2000 ppm, bevorzugt im Bereich von 600 ppm bis 2000 ppm, besonders bevorzugt im Bereich von 650 ppm bis 2000 ppm aufweist. Messmethoden für die Bestimmung des Gesamtchlorgehalts wie beispielsweise Röntgenfluoreszenz oder Wickbold-Verbrennung in Verbindung mit Titration mit Silbernitrat sind dem Fachmann bekannt. Im Zweifelsfall ist die Bestimmung gemäß DIN 51 577 (Teil 4) vom Februar 1994 maßgeblich. Zur Kalibrierung werden Proben von ortho-Dichlorbenzol in einer Matrix aus einer destillierten, bei Raumtemperatur flüssigen Methylen-Diphenylen-Diisocyanat-Isomerenmischung (deren Gesamtchlorgehalt vernachlässigbar ist) verwendet. Insbesondere findet eine Isomerenmischung aus 2,4'-Methylen-Diphenylen-Diisocyanat und 4,4'-Methylen-Diphenylen-Diisocyanat im Massenverhältnis 1 : 1 Verwendung. Die Isomerenverteilung ist jedoch nur insofern von Bedeutung, als die Isomerenmischung bei Raumtemperatur flüssig sein muss.

In **Schritt b)** des erfindungsgemäßen Verfahrens, dem **Trimerisierungsschritt,** wird die Temperatur so erhöht, dass die Trimerisierungsreaktion zur Bildung der Isocyanurat-Gruppen einsetzt. Dies wird bewirkt, indem die in Schritt a) (in den Ausführungsformen (3) und $\gamma$) präziser: *in Schritt a.2)*), erhaltene, Isocyanatgruppen-Trimerisierungskatalysator umfassende Isocyanat-Mischung kontinuierlich durch eine erste Verweilzeitzone bei einer Temperatur im Bereich von 50 °C bis 120 °C, bevorzugt von 60 °C bis 110 °C, besonders bevorzugt von 70 °C bis 100 °C, unter Erhalt einer Isocyanatgruppen-Trimerisierungskatalysator umfassenden, Uretdion- und Isocyanurat-haltigen Isocyanat-Mischung, geführt werden. Die Bildung von Uretdiongruppen ist nicht erwünscht, an dieser Stelle aber nicht völlig zu unterbinden.

Die Verweilzeit der Isocyanatgruppen-Trimerisierungskatalysator umfassenden Isocyanat-Mischung in der ersten Verweilzeitzone liegt bevorzugt im Bereich von 1 min bis 240 min, besonders bevorzugt im Bereich von 20 min bis 150 min und ganz besonders bevorzugt im Bereich von 30 min bis 60 min. Die erste Verweilzeitzone kann dabei eine dem Fachmann bekannte Reaktionseinrichtung sein, insbesondere ein Rührkessel, optional mit vorgeschaltetem Wärmeaustauscher, oder - bevorzugt - ein temperierbarer Rohrreaktor, der optional Mischelemente enthalten kann. Im Falle eines Rührkessels mit vorgeschaltetem Wärmeaustauscher erfolgt die Aufheizung der in Schritt a) erhaltenen Isocyanatgruppen-Trimerisierungskatalysator umfassenden Isocyanat-Mischung auf die Temperatur von Schritt b) in diesem Wärmeaustauscher unter indirekter Beheizung; ist kein Wärmeaustauscher vorgesehen, erfolgt die Aufheizung nur durch entsprechende Beheizung des Rührkessels. Im Falle eines Rohrreaktors wird derselbe entsprechend beheizt. In jedem Fall ist es bevorzugt, die Temperatur der in Schritt a) erhaltenen Isocyanatgruppen-Trimerisierungskatalysator umfassenden Isocyanat-Mischung mit einer Geschwindigkeit der Temperaturänderung im Bereich von 2 °C/min bis 90 °C/min, bevorzugt von 5 °C/min bis 60 °C/min, besonders bevorzugt von 15 °C/min bis 55 °C/min , auf die Temperatur in Schritt b) einzustellen.

In **Schritt c)** des erfindungsgemäßen Verfahrens, dem **Inaktivierungs- und Rückspaltungsschritt**, wird die Temperatur gegenüber Schritt b) in einer zweiten Verweilzeitzone weiter erhöht, und zwar auf Werte, bei denen die Aktivität des Isocyanatgruppen-Trimerisierungskatalysators (insbesondere irreversibel) verloren geht (gegebenenfalls

unterstützt durch die Zugabe eines Abstoppers) und in Schritt b) gebildetes Uretdion in Isocyanat zurückgespalten wird. Der Einsatz chemischer Abstopper ist in bevorzugten Ausführungsformen des erfindungsgemäßen Verfahrens verzichtbar, weil solche Isocyanatgruppen-Trimerisierungskatalysatoren eingesetzt werden, die rein thermisch - also durch das kontinuierliche Führen der in Schritt b) erhaltenen, Isocyanatgruppen-Trimerisierungskatalysator umfassenden, Uretdion- und Isocyanurat-haltigen Isocyanat-Mischung durch die zweite Verweilzeitzone bei einer Temperatur im Bereich von 160 °C bis 220 °C, bevorzugt von 170 °C bis 215 °C, besonders bevorzugt von 180 °C bis 210 °C - unter Erhalt der inaktiven Isocyanatgruppen-Trimerisierungskatalysator umfassenden, Isocyanurat-haltigen Isocyanat-Mischung inaktiviert werden. Diese rein thermische Inaktivierung wird durch den Einsatz besonderer Isocyanatgruppen-Trimerisierungskatalysatoren wie insbesondere der Alkylaminoalkylphenole (unter denen Tris(dimethylaminomethyl)-phenol besonders bevorzugt ist) ermöglicht. Inwieweit andere Isocyanatgruppen-Trimerisierungskatalysatoren unter den jeweils gewählten Temperatur-bedingungen von Schritt c) rein thermisch inaktivierbar sind, kann im Zweifelsfall durch einfache Vorversuche vom Fachmann ermittelt werden.

Soll ein Isocyanatgruppen-Trimerisierungskatalysator eingesetzt werden, der selbst im oberen Bereich der in Schritt c) möglichen Temperaturen nicht inaktiviert wird, so ist es zweckmäßig, vor dem Führen durch die zweite Verweilzeitzone einen Abstopper bei einer Temperatur im Temperaturbereich von Schritt b) zuzugeben. In dieser Ausführungsform umfasst Schritt c) daher die folgenden beiden Teilschritte:

c.1) Zugabe eines Abstoppers zu der in Schritt b) erhaltenen, Isocyanatgruppen-Trimerisierungskatalysator umfassenden Uretdion- und Isocyanurat-haltigen Isocyanat-Mischung im Temperaturbereich von Schritt b), d. h. bei einer Temperatur im Bereich von 50 °C bis 120 °C, bevorzugt von 60 °C bis 110 °C, besonders bevorzugt von 70 °C bis 100 °C, insbesondere bei der gleichen Temperatur, bei der Schritt b) durchgeführt wird;

c.2) Führen der Abstopper-haltigen, Isocyanatgruppen-Trimerisierungskatalysator umfassenden Uretdion- und Isocyanurat-haltigen Isocyanat-Mischung durch eine zweite Verweilzeitzone bei einer Temperatur im Bereich von 160 °C bis 220 °C, bevorzugt von 170 °C bis 215 °C, besonders bevorzugt von 180 °C bis 210 °C, unter Erhalt einer inaktiven Isocyanatgruppen-Trimerisierungskatalysator umfassenden, Isocyanurat-haltigen Isocyanat-Mischung.

Bei Durchführung von Schritt c.1) wird als einzusetzender Abstopper bevorzugt ein organisches Säurechlorid oder eine Mischung aus mehreren organischen Säurechloriden eingesetzt, insbesondere Benzoylchlorid, Phthaloylchlorid oder einer Mischung beider. Der Abstopper wird bevorzugt in einem molaren Verhältnis von 1 : 3 bis 1 : 1 bezogen auf die eingesetzte Menge des Katalysators eingesetzt. Bei Einsatz eines Rohrreaktors als erste Verweilzeitzone kann der Abstopper zu diesem Zweck in das strömungstechnisch hintere Ende des Reaktorrohrs eingebracht werden. Bei Einsatz eines kontinuierlich durchströmten Rührkessels als erste Verweilzeitzone kann der Abstopper zu der den Rührkessel verlassenden Mischung gegeben werden, bevor diese in die zweite Verweilzeitzone geführt wird. Bevorzugt wird der Abstopper jedoch über eine weitere Mischvorrichtung, die zwischen der ersten Verweilzeitzone und der zweiten Verweilzeitzone angeordnet ist, zu der in Schritt b) erhaltenen Mischung gegeben. Auf diese Weise ist gewährleistet, dass die in Schritt b) erhaltene, Isocyanatgruppen-Trimerisierungskatalysator umfassenden Uretdion- und Isocyanurat-haltigen Isocyanat-Mischung und der Abstopper vor Einfuhr in die zweite Verweilzeitzone hinreichend vermischt sind.

Der Einsatz eines in Schritt c) nicht vollständig inaktivierbaren Isocyanatgruppen-Trimerisierungskatalysators ohne Zugabe eines Abstoppers ist nicht bevorzugt, da - je nach Art der späteren Anwendung der herzustellenden Isocyanat-Mischung - eine störende Wirkung des Isocyanatgruppen-Trimerisierungskatalysators nicht ausgeschlossen werden kann. Soll trotzdem so verfahren werden, so hält man die Temperatur in der dritten Verweilzeitzone (Schritt d); siehe unten) stets unterhalb der Temperatur von Schritt b) und verhindert auf diese Weise ein erneutes "Anspringen" der Trimerisierungsreaktion.

Die Verweilzeit der Isocyanatgruppen-Trimerisierungskatalysator umfassenden, Uretdion- und Isocyanurat-haltigen Isocyanat-Mischung in der zweiten Verweilzeitzone liegt bevorzugt im Bereich von 1 min bis 60 min, besonders bevorzugt im Bereich von 1 min bis 10 min und ganz besonders bevorzugt im Bereich von 1,5 min bis 5 min. Die zweite Verweilzeitzone kann dabei wie die erste eine dem Fachmann bekannte Reaktionseinrichtung sein, insbesondere ein Rührkessel, optional mit vorgeschaltetem Wärmeaustauscher, oder - bevorzugt - ein temperierbarer Rohrreaktor, der optional Mischelemente enthalten kann. Im Falle eines Rührkessels mit vorgeschaltetem Wärmeaustauscher erfolgt die Aufheizung der in Schritt b) erhaltenen Isocyanatgruppen-Trimerisierungskatalysator umfassenden, Uretdion- und Isocyanurat-haltigen Isocyanat-Mischung auf die Temperatur von Schritt c) in diesem Wärmeaustauscher unter indirekter Beheizung; ist kein Wärmeaustauscher vorgesehen, erfolgt die Aufheizung nur durch entsprechende Beheizung des Rührkessels. Im Falle eines Rohrreaktors wird derselbe entsprechend beheizt. In jedem Fall ist es bevorzugt, die Temperatur der in Schritt b) erhaltenen Isocyanatgruppen-Trimerisierungskatalysator umfassenden, Uretdion- und Isocyanurat-haltigen Isocyanat-Mischung mit einer Geschwindigkeit der Temperaturänderung im Bereich von 10 °C/min bis 160 °C/min, bevorzugt von 10 °C/min bis 100 °C/min, besonders bevorzugt von 25 °C/min bis 85 °C/min, auf die Temperatur in Schritt c) einzustellen.

In **Schritt d)** des erfindungsgemäßen Verfahrens, dem **"Abschreck"-Schritt**, wird die Temperatur gegenüber Schritt c) so erniedrigt, dass der in Schritt c) erreichte Zustand im Hinblick auf Isocyanurat- und Nebenkomponenten-Gehalt "eingefroren" wird. Dies wird bewirkt, indem die in Schritt c) erhaltene, inaktiven Isocyanatgruppen-Trimerisierungskatalysator umfassende, Isocyanurat-haltige Isocyanat-Mischung kontinuierlich durch eine dritte Verweilzeitzone bei einer Temperatur im Bereich von 10 °C bis 100 °C, bevorzugt im Bereich von 15 °C bis 80 °C, besonders bevorzugt im Bereich von 20 °C bis 50 °C, unter Erhalt der angestrebten (inaktiven Isocyanatgruppen-Trimerisierungskatalysator umfassenden) Isocyanurat-haltigen Isocyanat-Mischung, geführt wird. In einer Ausführungsform wird die Temperatur in Schritt d) stets unterhalb der Temperatur von Schritt b) gehalten.

Die Verweilzeit der Isocyanatgruppen-Trimerisierungskatalysator umfassenden, Isocyanurat-haltigen Isocyanat-Mischung in der dritten Verweilzeitzone liegt bevorzugt im Bereich von 0,5 min bis 120 min, besonders bevorzugt im Bereich von 1 min bis 60 min und ganz besonders bevorzugt im Bereich von 1 min bis 10 min. Die dritte Verweilzeitzone kann dabei wie die erste und die zweite eine dem Fachmann bekannte Reaktionseinrichtung sein, insbesondere ein Rührkessel, optional mit vorgeschaltetem Wärmeaustauscher, oder - bevorzugt - ein temperierbarer Rohrreaktor, der optional Mischelemente enthalten kann. Im Falle eines Rührkessels mit vorgeschaltetem Wärmeaustauscher erfolgt die Abkühlung der in Schritt c) erhaltenen, inaktiven Isocyanatgruppen-Trimerisierungskatalysator umfassenden, Isocyanurat-haltigen Isocyanat-Mischung auf die Temperatur von Schritt d) in diesem Wärmeaustauscher unter indirekter Kühlung; ist kein Wärmeaustauscher vorgesehen, erfolgt die Abkühlung nur durch entsprechende Temperierung des Rührkessels. Im Falle eines Rohrreaktors wird derselbe entsprechend gekühlt. In jedem Fall ist es bevorzugt, die Temperatur der in Schritt c) erhaltenen inaktiven Isocyanatgruppen-Trimerisierungskatalysator umfassenden, Isocyanurat-haltigen Isocyanat-Mischung mit einer Geschwindigkeit der Temperaturänderung im Bereich von 15 °C/min bis 200 °C/min, bevorzugt im Bereich von 15 °C/min bis 125 °C/min, besonders bevorzugt im Bereich von 35 °C/min bis 105 °C/min, auf die Temperatur in Schritt d) einzustellen.

Es ist möglich, als erste, zweite und dritte Verweilzeitzone jeweils einen Rührkessel, optional (und bevorzugt) mit vorgeschaltetem Wärmeaustauscher, einzusetzen (sog. *Rührkesselkaskade*). Besonders bevorzugt ist es jedoch, als erste, zweite und dritte Verweilzeitzone jeweils einen temperierbaren Rohrreaktor, der optional Mischelemente enthält, einzusetzen.

Das erfindungsgemäße Verfahren kann direkt mit einer Isocyanat-Produktionsanlage gekoppelt werden, indem die erste und die zweite Isocyanat-Komponente jeweils dem (kontinuierlich anfallenden) Produktstrom der entsprechenden Isocyanat-Produktionsanlage entnommen werden (gegebenenfalls kann ein Puffertank zwischengeschaltet sein). Dies ermöglicht eine "vollkontinuierliche" Produktion von Isocyanurat-haltigen Isocyanat-Mischungen. Verfahren und Anlagen zur Herstellung von Isocyanaten sind dem Fachmann bekannt, es sei hier exemplarisch auf die internationale Patentanmeldung WO 2017/050776 A1 und die dort zitierte Literatur verwiesen. Diese Ausführungsform eignet sich insbesondere dann, wenn eine der beiden Isocyanat-Komponenten MMDI und die andere ein Gemisch aus MMDI und PMDI ist. So kann eine geeignete MMDI-Fraktion durch Aufreinigung und Fraktionierung des in WO 2017/050776 A1 beschriebenen Isocyanat-Stroms 140 gewonnen werden. Als Gemisch aus MMDI und PMDI eignet sich der in WO 2017/050776 A1 beschriebene Strom 141 umfassend polymere Isocyanat-Fraktionen.

Es ist selbstverständlich auch möglich, die erste und die zweite Isocyanat-Komponente jeweils einem Lagerungs- oder Transportbehälter (beispielsweise dem Tank eines Tankwagens, Güterwaggons oder Frachtschiffes), welche nicht an die entsprechenden Isocyanat-Produktionsanlage angebunden sind, zu entnehmen. Dies erhöht die Flexibilität des Verfahrens, da die Produktion der angestrebten Mischung auch an Orten ohne räumliche Nähe zu einer Isocyanat-Produktionsanlage stattfinden kann.

## Beispiele

### Verwendete Materialien

- "Desmodur 44M", kurz "44M" (MMDI mit einer Zusammensetzung von 98,5% 4,4'-MMDI und 1,5% 2,4'-MMDI und einer Viskosität bei 40 °C von 4,00 mPa · s; Covestro Deutschland AG, Leverkusen).
- "Desmodur 44 V20", kurz "44 V20" (Gemisch aus MMDI und PMDI mit einem MMDI-Massenanteil im Bereich von 40 % bis 44 % und einer Viskosität bei 40 °C von 80,0 mPa · s; Covestro Deutschland AG, Leverkusen).
- Benzoylchlorid (99 %ig, Aldrich, Steinheim).
- Tris(dimethylaminomethyl)phenol (Araldite Hardener HY 960, Huntsman Advanced Materials, Basel).
- Triethylphosphat (Levagard TEP, Lanxess, Köln).

**Prüfbedingungen**

- Viskosität mittels Rotationsviskosimeter (DIN 53019-1: 2008-09).
- Isocyanatgehalt (DIN EN ISO 11909: 2007-05).
- Der Uretdion-Gehalt wurde IR-spektroskopisch bestimmt.
- Der PIR-Gehalt berechnet sich nach folgender Formel:

$$\% \text{ PIR} = [(\text{Ausgangs-NCO} - \text{End-NCO}) / (0{,}5 \cdot \text{Ausgangs-NCO})] \cdot 100$$

- Der Kristallisationsbeginn des in einem verschließbaren Probenröhrchen befindlichen Produktes wird in einem Thermostaten mit einer Temperatur-Rampe beginnend bei 25 °C mit einem Delta von -2,5 K/Tag visuell bestimmt.

**Beispiel 1 (Vergleichsbeispiel): Herstellung einer Isocyanurat-haltigen MMDI/PMDI-Mischung durch ein diskontinuierliches Verfahren unter *ausschließlich chemischer* Deaktivierung des Katalysators**

3,00 kg 44M und 2,00 kg 44 V20 wurden in einem gerührten und beheizten 10-L-Glas-Dreihalskolben, ausgestattet mit Rückflusskühler und Überkopfrührer unter $N_2$-Beschleierung mit 90,2 g Katalysatorlösung (8,0 Massen-% Tris(dimethylaminomethyl)phenol in TEP) vermischt und 1 h bei 80 °C und Umgebungsdruck gerührt. Zur Bestimmung des Reaktionsendes wurde in Abständen von 15 min der NCO-Gehalt des Reaktionsgemisches bestimmt. Bei Erreichen eines Gehalts von 27,5 Massen-% NCO wurden 3,6 g Benzoylchlorid als Abstopper zugesetzt, und es wurde weitere 10 min bei 80 °C nachgerührt. Nach dem Abkühlen auf Raumtemperatur trat nach 5 Stunden eine Eintrübung auf.

Analytik: siehe **Tabelle 1**.

**Beispiel 2 (Vergleichsbeispiel): Herstellung einer Isocyanurat-haltigen MMDI/PMDI-Mischung durch ein diskontinuierliches Verfahren unter thermischer Katalysatordesaktivierung *bei 140* °C**

Es wurde verfahren wie in Beispiel 1 mit dem Unterschied, dass nach der Trimerisierung bei 80 °C das Reaktionsgemisch innerhalb von 25 min auf 140 °C hochgeheizt wurde und man es anschließend Raumtemperatur abkühlen ließ. Nach dem Abkühlen auf Raumtemperatur trat eine Eintrübung auf, die sich am Folgetag verstärkte.

**Beispiels (Vergleichsbeispiel): Herstellung einer Isocyanurat-haltigen MMDI/PMDI-Mischung durch ein diskontinuierliches Verfahren unter thermischer Katalysatordesaktivierung bei 200 °C**

Es wurde verfahren wie in Beispiel 1 mit dem Unterschied, dass nach der Trimerisierung bei 80 °C das Reaktionsgemisch innerhalb von 34 min auf 200 °C hochgeheizt wurde und man es anschließend auf Raumtemperatur abkühlen ließ. Nach dem Abkühlen auf Raumtemperatur trat eine Eintrübung auf, die sich am Folgetag verstärkte.

**Beispiel 4 (Vergleichsbeispiel): Herstellung einer Isocyanurat-haltigen MMDI/PMDI-Mischung durch ein teilkontinuierliches Verfahren *(ohne thermische Nachbehandlung*; ohne chemische Katalysator-Inaktivierung)**

371,3 g/h 44M und 247,5 g/h 44 V20 wurden kontinuierlich in einem Statikmischer bei einer Temperatur von 40 °C vermischt. Der Volumenstrom der verlassenden Isocyanat-Mischung aus 44 V20 und 44M wurde aufgeteilt. In einem Teil des Volumenstroms wurde eine dünnere Kapillare eingebracht, durch welche die Katalysatorlösung (8,0 Massen-% Tris(dimethylaminomethyl)phenol in TEP) mit 12,3 g/h geführt wurde. Der Austritt der Kapillare und des diese umhüllenden Zuführungsrohres für die Isocyanat-Mischung mündeten in einen Statikmischer, der auch als Wärmeaustauscher fungierte. In diesem Statikmischer trafen die drei Ströme (zwei Ströme der Isocyanat-Mischung und ein Strom an Katalysatorlösung) aufeinander und wurden bei 22 °C gemischt, bei 80 °C und einer Verweilzeit von 45 min zur Trimerisierung gebracht und anschließend in einem Sammelbehälter, in dem das Produkt abkühlte, aufgefangen. Für die Analytik wurden Produktproben vor dem Sammelbehälter gezogen. Das Produkt wies bereits nach einer Lagerzeit von 24 h (RT) einen deutlichen NCO-Abfall auf (vgl. Tabelle 1) und hatte sich nach 7 Tagen im Sammelbehälter verfestigt.

Analytik: siehe **Tabelle 1**.

**Beispiels (Vergleichsbeispiel): Herstellung einer Isocyanurat-haltigen MMDI/PMDI-Mischung durch ein *teil*kontinuierliches Verfahren *(ohne thermische Nachbehandlung*; mit chemischer, irreversibler Katalysator-Inaktivierung)**

Es wurde verfahren wie in Beispiel 4, mit dem Unterschied, dass für die für die Analytik vor dem Sammelbehälter gezogenen Produktproben mit 0,08 Massen-% (bezogen auf die Probenmasse) Benzoylchlorid zur Deaktivierung des Katalysators versetzt wurden. Das chemisch abgestoppte Produkt war stabil und zeigte nach dem Abkühlen leichte Eintrübungen.

Analytik: siehe **Tabelle 1**.

**Beispiel 6 (erfindungsgemäß): Herstellung einer Isocyanurat-haltigen MMDI/PMDI-Mischung durch ein kontinuierliches Verfahren mit irreversibler, thermischer Katalysator-Inaktivierung und "Abschrecken"**

Es wurde verfahren wie in Beispiel 4 mit dem Unterschied, dass sich an die Trimerisierung bei 80 °C mit einer Verweilzeit von 45 min (entsprechend *Schritt b)* des erfindungsgemäßen Verfahrens) eine weitere kontinuierlich durchströmte Verweilzeitzone anschloss, in welcher das Reaktionsgemisch aus Schritt b) innerhalb von 4 min auf 200 °C erhitzt wurde (entsprechend *Schritt c)* des erfindungsgemäßen Verfahrens), woran sich ein letzte kontinuierlich durchströmte Verweilzeitzone anschloss, in welcher das Reaktionsgemisch aus Schritt c) innerhalb von 4 min auf Umgebungstemperatur abgekühlt wurde (entsprechend *Schritt d)* des erfindungsgemäßen Verfahrens). Das diese letzte Verweilzeitzone verlassende Produkt wurde in einem Sammelbehälter aufgefangen. Für die Analytik wurden Produktproben vor dem Sammelbehälter gezogen. Das Produkt wies keine Eintrübungen auf, und der NCO-Gehalt war nach 24 h noch auf dem gleichen Wert wie zu Beginn (siehe Tabelle 1).

**Tabelle 1:** Analytikdaten des Ausgangs-MMDI/PMDI-Gemisches und der in den Beispielen 1 bis 6 hergestellten Produkte.

| | **NCO-Best. nach 0h [Massen -%]** | **NCO-Best. nach 24h [Massen -%]** | **UD[a] bezogen auf MG 500 [Massen-%]** | **Aussehen** | **PIR-Gehalt berechnet [Massen-%]** | **Viskosität bei 25°C [mPa - s]** | **Kristallisations-beginn [°C]** |
|---|---|---|---|---|---|---|---|
| **MMDI/PMDI-Mischung (44M + 44 V20)** | 32,5 | n. b. | 0,18 | klar | 0 | 24 | n. b. |
| **Beispiel 1 (Vgl.)** | n. b. | 27,1 | 1,11 | leicht trüb | 33,2 | 854 | 10 |
| **Beispiel 2 (Vgl.)** | 27,5 (27,0)[b] | 26,9 | 1,59 | stark trüb | 34,5 | 1.470 | n. b.[c] |
| **Beispiel 3 (Vgl.)** | 27,6 (26,9)[b] | 26,1 | 2,04 | stark trüb | 39,4 | 3.470 | n. b.[c] |
| **Beispiel 4 (Vgl.)** | 25,7[d] | 22,9 | n. b. | | Bei RT fest geworden - | | |
| **Beispiel 5 (Vgl.)** | 27,3 | 27,5 | 1,11 | klar | 30,8 | 525 | 2,5 |
| **Beispiel 6 (erf.-gem.)** | 27,5 | 27,5 | 0,82 | klar | 30,8 | 550 | 0 |

[a] UD = Uretdion.
[b] Der in Klammern angegebene Wert gibt den NCO-Gehalt nach Beendigung der Aufheizung auf 140 °C bzw. 200 °C an.
[c] Der Kristallisationsbeginn konnte aufgrund der starken Trübung und der hohen Viskosität nicht zuverlässig bestimmt werden (n. b. = nicht bestimmt).
[d] Durch die zeitliche Verzögerung zwischen Probenahme und NCO-Titration von ca. 15 min reagiert die Lösung ohne chemischen Abstopper weiter, und der NCO-Gehalt weicht von dem in den Beispielen 2 und 3 sowie 5 und 6 ab.

Beispiel 1 zeigt, dass die diskontinuierliche Durchführung des Verfahrens mit rein chemischer Katalysatordeaktivierung zu erhöhtem Uretdion-Gehalt, erhöhter Viskosität, Trübung und erhöhter Kristallisationstemperatur führt. Ersetzt man die chemische Katalysatordeaktivierung durch eine thermische Katalysatordeaktivierung bei 140 °C (Beispiel 2), steigen Uretdion-Gehalt und Viskosität weiter an und die Trübung nimmt weiter zu. Wird die Deaktivierungstemperatur weiter erhöht auf 200 °C, nehmen diese unerwünschten Wirkungen weiter zu, während es bei Anwendung des erfindungsgemäßen Verfahrens mit der gleichen Deaktivierungstemperatur (Beispiel 6, Deaktivierung ebenfalls bei 200 °C) gelingt, ein klares Produkt mit geringem Uretdion-Gehalt und konstantem NCO-Wert, das erst bei 0 °C zu kristallisieren beginnt, zu erhalten. Dieses Verfahren ist auch den teilkontinuierlichen Prozessen ohne (Beispiel 4) oder mit ausschließlich chemischer (Beispiel 5) Katalysatordeaktivierung überlegen.

**Patentansprüche**

**1.** Verfahren zur Herstellung einer Isocyanurat-haltigen Isocyanat-Mischung, umfassend die Schritte:

a) Kontinuierliches Bereitstellen einer Isocyanatgruppen-Trimerisierungskatalysator umfassenden Isocyanat-Mischung durch Vermischen einer ersten Isocyanat-Komponente (K1), einer zweiten, von der ersten verschiedenen Isocyanat-Komponente (K2) und eines Isocyanatgruppen-Trimerisierungskatalysators (K3);
b) Kontinuierliches Führen der in Schritt a) bereitgestellten Mischung durch eine erste Verweilzeitzone bei einer Temperatur im Bereich von 50 °C bis 120 °C unter Erhalt einer Isocyanatgruppen-Trimerisierungskatalysator umfassenden, Uretdion- und Isocyanurat-haltigen Isocyanat-Mischung;
c) Kontinuierliches Führen der in Schritt b) erhaltenen Mischung durch eine zweite Verweilzeitzone bei einer Temperatur im Bereich von 160 °C bis 220 °C unter Erhalt einer inaktiven Isocyanatgruppen-Trimerisierungskatalysator umfassenden, Isocyanurat-haltigen Isocyanat-Mischung, wobei dem Führen durch die zweite Verweilzeitzone die Zugabe eines Abstoppers bei einer Temperatur im Temperaturbereich von Schritt b) vorausgehen kann;
d) Kontinuierliches Führen der in Schritt c) erhaltenen Mischung durch eine dritte Verweilzeitzone bei einer Temperatur im Bereich von 10 °C bis 100 °C unter Erhalt der angestrebten Isocyanurat-haltigen Isocyanat-Mischung.

**2.** Verfahren gemäß Anspruch 1, bei welchem Schritt a) umfasst:
Kontinuierliches Eintragen der ersten Isocyanat-Komponente (K1), der zweiten, von der ersten verschiedenen Isocyanat-Komponente (K2) und des Isocyanatgruppen-Trimerisierungskatalysators (K3) in eine Mischeinrichtung und Vermischen der eingetragenen Isocyanat-Komponenten (K1, K2) und des eingetragenen Trimerisierungskatalysators (K3) unter Erhalt der Isocyanatgruppen-Trimerisierungskatalysator umfassenden Isocyanat-Mischung.

**3.** Verfahren gemäß Anspruch 1, bei welchem Schritt a) umfasst:

a.1) Kontinuierliches Eintragen einer der beiden Isocyanat-Komponenten (K1, K2) und des Isocyanatgruppen-Trimerisierungskatalysators (K3) in eine erste Mischeinrichtung (M1) und Vermischen der eingetragenen Isocyanat-Komponente und des eingetragenen Isocyanatgruppen-Trimerisierungskatalysators (K3) unter Erhalt einer eine der beiden Isocyanat-Komponenten (K1, K2) und den Isocyanatgruppen-Trimerisierungskatalysator (K3) enthaltenden Mischung;
a.2) Kontinuierliches Eintragen der in Schritt a.1) erhaltenen, eine der beiden Isocyanat-Komponenten (K1, K2) und den Isocyanatgruppen-Trimerisierungskatalysator (K3) enthaltenden Mischung und der anderen Isocyanat-Komponente in eine zweite Mischeinrichtung (M2) und Vermischen der eingetragenen eine der beiden Isocyanat-Komponenten (K1, K2) und den Isocyanatgruppen-Trimerisierungskatalysator (K3) enthaltenden Mischung und der eingetragenen anderen Isocyanatgruppen-Komponente unter Erhalt der Isocyanatgruppen-Trimerisierungskatalysator umfassenden Isocyanat-Mischung.

**4.** Verfahren gemäß Anspruch 1, bei welchem Schritt a) umfasst:

a.1) Kontinuierliches Eintragen der ersten Isocyanat-Komponente (K1) und der zweiten, von der ersten verschiedenen Isocyanat-Komponente (K2) in eine erste Mischeinrichtung (M1) und Vermischen der eingetragenen Isocyanat-Komponenten in dieser ersten Mischeinrichtung (M1) unter Erhalt einer Isocyanat-Mischung;
a.2) Kontinuierliches Eintragen der Isocyanatgruppen-Trimerisierungskatalysators (K3) und des in Schritt a.1) erhaltenen Isocyanat-Mischung in eine zweite Mischeinrichtung (M2) und Vermischen der eingetragenen Isocyanat-Mischung und des eingetragenen Isocyanatgruppen-Trimerisierungskatalysators (K3) unter Erhalt der

Isocyanatgruppen-Trimerisierungskatalysator umfassenden Isocyanat-Mischung.

5. Verfahren gemäß Anspruch 4, bei welchem in Schritt a) die die Mischeinrichtung (M1) kontinuierlich verlassende Isocyanat-Mischung vor deren Eintragen in die zweite Mischeinrichtung (M2) durch eine der zweiten Mischeinrichtung (M2) vorgeschaltete Verweilzeitzone geführt wird.

6. Verfahren gemäß einem der vorstehenden Ansprüche, bei welchem Schritt a) bei einer Temperatur im Bereich von 10 °C bis < 50 °C durchgeführt wird.

7. Verfahren gemäß einem der vorstehenden Ansprüche, bei welchem Art und Zusammensetzung der ersten und der zweiten Isocyanat-Komponente jeweils so aufeinander abgestimmt werden, dass die in Schritt d) erhaltene Isocyanurat-haltige Isocyanat-Mischung einen NCO-Gehalt im Bereich von 24 Massen-% bis 32 Massen-% und eine Viskosität im Bereich von 50 mPa · s (25 °C) bis 40.000 mPa · s (25 °C) aufweist.

8. Verfahren gemäß einem der vorstehenden Ansprüche, insbesondere gemäß Anspruch 7, bei welchem die erste Isocyanat-Komponente (K1) und zweite Isocyanat-Komponente (K2) jeweils ausgewählt ist aus der Gruppe bestehend aus (i) Methylen-Diphenylen-Diisocyanat, (ii) Gemischen aus Methylen-Diphenylen-Diisocyanat und Polymethylen-Polyphenylen-Polyisocyanat, (iii) Toluylendiisocyanat und (iv) Mischungen aus (i) oder (ii) mit (iii).

9. Verfahren gemäß einem der vorstehenden Ansprüche, bei welchem der in Schritt a) eingesetzte Isocyanatgruppen-Trimerisierungskatalysator ausgewählt ist aus der Gruppe bestehend aus quarternären Ammoniumhydroxiden, Alkalimetallhydroxiden, Alkalimetallalkoxiden, Trialkylphosphinen, in *para*-Position substituierten Pyridinen, metallorganischen Salzen, Lewis-Säuren und Alkalimetallsalzen organischer Säuren.

10. Verfahren gemäß Anspruch 9, bei welchem in Schritt c) ein Abstopper zugegeben wird, der ein organisches Säurechlorid umfasst, wobei das organische Säurechlorid in einem molaren Verhältnis von Säurechlorid : Isocyanatgruppen-Trimerisierungskatalysator im Bereich von 1 : 3 bis 1 : 1 eingesetzt wird.

11. Verfahren gemäß einem der Ansprüche 1 bis 8, bei welchem der in Schritt a) eingesetzte Isocyanatgruppen-Trimerisierungskatalysator ein Alkylaminoalkylphenol, bevorzugt Tris(dimethylaminomethyl)-phenol umfasst und insbesondere ein Alkylaminoalkylphenol, bevorzugt Tris(dimethylaminomethyl)-phenol, ist.

12. Verfahren gemäß Anspruch 11, bei welchem zur Inaktivierung des Isocyanatgruppen-Trimerisierungskatalysators kein Abstopper eingesetzt wird.

13. Verfahren gemäß einem der Ansprüche 5 bis 12, bei welchem die der zweiten Mischeinrichtung (M2) vorgeschaltete Verweilzeitzone ein Rohrreaktor ist, der optional Mischelemente enthält.

14. Verfahren gemäß einem der vorstehenden Ansprüche, bei welchem die erste, zweite und dritte Verweilzeitzone jeweils einen Rührkessel, optional mit vorgeschaltetem Wärmeaustauscher, oder einen temperierbaren Rohrreaktor, der optional Mischelemente enthält, umfasst.

15. Verfahren gemäß einem der vorstehenden Ansprüche, bei welchem

die erste und die zweite Isocyanat-Komponente jeweils einem Produktstrom der entsprechenden Isocyanat-Produktionsanlage entnommen werden, oder
die erste und die zweite Isocyanat-Komponente jeweils einem Lagerungs- oder Transportbehälter entnommen werden, welcher nicht an die entsprechenden Isocyanat-Produktionsanlage angebunden ist.

16. Verfahren gemäß einem der vorstehenden Ansprüche, bei welchem die Temperatur der in Schritt c) erhaltenen inaktiven Isocyanatgruppen-Trimerisierungskatalysator, Isocyanurat-haltigen umfassenden Isocyanat-Mischung mit einer Geschwindigkeit der Temperaturänderung im Bereich von 15 °C/min bis 200 °C/min auf die Temperatur in Schritt d) eingestellt wird.

## Claims

1. Process for preparing an isocyanurate-containing isocyanate mixture, comprising the steps of:

a) continuously providing an isocyanate mixture comprising isocyanate group trimerization catalyst by mixing a first isocyanate component (K1), a second isocyanate component (K2) different from the first, and an isocyanate group trimerization catalyst (K3);
b) continuously guiding the mixture provided in step a) through a first dwell zone at a temperature in the range from 50°C to 120°C to obtain a uretdione- and isocyanurate-containing isocyanate mixture comprising isocyanate group trimerization catalyst;
c) continuously guiding the mixture obtained in step b) through a second dwell zone at a temperature in the range from 160°C to 220°C to obtain an isocyanurate-containing isocyanate mixture comprising inactive isocyanate group trimerization catalyst, wherein the guiding through the second dwell zone may be preceded by the addition of a stopper at a temperature in the temperature range of step b);
d) continuously guiding the mixture obtained in step c) through a third dwell zone at a temperature in the range from 10°C to 100°C to obtain the desired isocyanurate-containing isocyanate mixture.

**2.** Process according to Claim 1, in which step a) comprises:
continuously introducing the first isocyanate component (K1), the second isocyanate component (K2) different from the first, and the isocyanate group trimerization catalyst (K3) into a mixing device and mixing the isocyanate components (K1, K2) introduced and the trimerization catalyst (K3) introduced to obtain the isocyanate mixture comprising isocyanate group trimerization catalyst.

**3.** Process according to Claim 1, in which step a) comprises:

a.1) continuously introducing one of the two isocyanate components (K1, K2) and the isocyanate group trimerization catalyst (K3) into a first mixing device (M1) and mixing the isocyanate component introduced and the isocyanate group trimerization catalyst (K3) introduced to obtain a mixture comprising one of the two isocyanate components (K1, K2) and the isocyanate group trimerization catalyst (K3);
a.2) continuously introducing the mixture which is obtained in step a.1) and comprises one of the two isocyanate components (K1, K2) and the isocyanate group trimerization catalyst (K3), and the other isocyanate component into a second mixing device (M2) and mixing the mixture comprising one of the two isocyanate components (K1, K2) and the isocyanate group trimerization catalyst (K3) introduced and the other isocyanate group component introduced to obtain the isocyanate mixture comprising isocyanate group trimerization catalyst.

**4.** Process according to Claim 1, in which step a) comprises:

a.1) continuously introducing the first isocyanate component (K1) and the second isocyanate component (K2) different from the first into a first mixing device (M1) and mixing the isocyanate components introduced in this first mixing device (M1) to obtain an isocyanate mixture;
a.2) continuously introducing the isocyanate group trimerization catalyst (K3) and the isocyanate mixture obtained in step a.1) into a second mixing device (M2) and mixing the isocyanate mixture introduced and the isocyanate group trimerization catalyst (K3) introduced to obtain the isocyanate mixture comprising isocyanate group trimerization catalyst.

**5.** Process according to Claim 4, in which, in step a), the isocyanate mixture leaving the mixing device (M1) continuously, before being introduced into the second mixing device (M2), is guided through a dwell zone upstream of the second mixing device (M2).

**6.** Process according to any of the preceding claims, in which step a) is conducted at a temperature in the range from 10°C to < 50°C.

**7.** Process according to any of the preceding claims, in which the nature and composition of the first and second isocyanate component are in each case matched to one another in such a way that the isocyanurate-containing isocyanate mixture obtained in step d) has an NCO content in the range from 24% by mass to 32% by mass and a viscosity in the range from 50 mPa · s (25°C) to 40 000 mPa · s (25°C) .

**8.** Process according to any of the preceding claims, especially according to Claim 7, in which the first isocyanate component (K1) and second isocyanate component (K2) are each selected from the group consisting of (i) methylene diphenylene diisocyanate, (ii) mixtures of methylene diphenylene diisocyanate and polymethylene polyphenylene polyisocyanate, (iii) tolylene diisocyanate and (iv) mixtures of (i) or (ii) with (iii).

9. Process according to any of the preceding claims, in which the isocyanate group trimerization catalyst used in step a) is selected from the group consisting of quaternary ammonium hydroxides, alkali metal hydroxides, alkali metal alkoxides, trialkylphosphines, para-substituted pyridines, organometallic salts, Lewis acids and alkali metal salts of organic acids.

10. Process according to Claim 9, in which a stopper comprising an organic acid chloride is added in step c), where the organic acid chloride is used in a molar ratio of acid chloride:isocyanate group trimerization catalyst in the range from 1:3 to 1:1.

11. Process according to any of Claims 1 to 8, in which the isocyanate group trimerization catalyst used in step a) comprises an alkylaminoalkylphenol, preferably tris(dimethylaminomethyl)phenol, and is especially an alkylaminoalkylphenol, preferably tris(dimethylaminomethyl)phenol.

12. Process according to Claim 11, in which no stopper is used to inactivate the isocyanate group trimerization catalyst.

13. Process according to any of Claims 5 to 12, in which the dwell zone upstream of the second mixing device (M2) is a tubular reactor optionally containing mixing elements.

14. Process according to any of the preceding claims, in which the first, second and third dwell zone each comprise a stirred tank, optionally with upstream heat exchanger, or a temperature-controllable tubular reactor optionally containing mixing elements.

15. Process according to any of the preceding claims, in which

the first and second isocyanate components are each taken from a product stream from the corresponding isocyanate production plant, or
the first and second isocyanate components are each taken from a storage or transport vessel unconnected to the corresponding isocyanate production plant.

16. Process according to any of the preceding claims, in which the temperature of the isocyanurate-containing comprising isocyanate mixture which is obtained in step c) inactive isocyanate group trimerization catalyst is adjusted to the temperature in step d) at a rate of temperature change in the range from 15°C/min to 200°C/min.

## Revendications

1. Procédé pour la préparation d'un mélange d'isocyanates contenant des groupes isocyanurate, comprenant les étapes :

a) préparation en continu d'un mélange d'isocyanates comprenant un catalyseur de trimérisation de groupes isocyanate par mélange d'un premier composant isocyanate (K1), d'un deuxième composant isocyanate (K2) différent du premier et d'un catalyseur de trimérisation (K3) de groupes isocyanate ;
b) envoi en continu du mélange préparé dans l'étape a) à travers une première zone de temps de séjour à une température dans la plage de 50 °C à 120 °C, avec obtention d'un mélange d'isocyanates contenant des groupes urétdione et isocyanurate, comprenant du catalyseur de trimérisation de groupes isocyanate ;
c) envoi en continu du mélange obtenu dans l'étape b) à travers une deuxième zone de temps de séjour à une température dans la plage de 160 °C à 220 °C, avec obtention d'un mélange d'isocyanates contenant des groupes isocyanurate, comprenant du catalyseur de trimérisation de groupes isocyanate inactif, l'addition d'un inhibiteur, à une température dans la plage de température de l'étape b), pouvant précéder l'envoi à travers la deuxième zone de temps de séjour ;
d) envoi en continu du mélange obtenu dans l'étape c) à travers une troisième zone de temps de séjour à une température dans la plage de 10 °C à 100 °C, avec obtention du mélange d'isocyanates recherché contenant des groupes isocyanurate.

2. Procédé selon la revendication 1, dans lequel l'étape a) comprend :
l'introduction en continu du premier composant isocyanate (K1), du deuxième composant isocyanate (K2) différent du premier, et du catalyseur de trimérisation (K3) de groupes isocyanate, dans un dispositif mélangeur et le mélange des composants isocyanate (K1, K2) introduits et du catalyseur de trimérisation (K3) introduit, avec obtention du

mélange d'isocyanates comprenant du catalyseur de trimérisation de groupes isocyanate.

**3.** Procédé selon la revendication 1, dans lequel l'étape a) comprend :

a.1) l'introduction en continu de l'un des deux composants isocyanate (K1, K2) et du catalyseur de trimérisation (K3) de groupes isocyanate dans un premier dispositif mélangeur (M1) et le mélange du composant isocyanate introduit et du catalyseur de trimérisation (K3) de groupes isocyanate introduit, avec obtention d'un mélange contenant l'un des deux composants isocyanate (K1, K2) et le catalyseur de trimérisation (K3) de groupes isocyanate ;
a.2) l'introduction en continu du mélange obtenu dans l'étape a.1), contenant l'un des deux composants isocyanate (K1, K2) et le catalyseur de trimérisation (K3) de groupes isocyanate, et de l'autre composant isocyanate dans un deuxième dispositif mélangeur (M2) et le mélange du mélange introduit, contenant l'un des deux composants isocyanate (K1, K2) et le catalyseur de trimérisation (K3) de groupes isocyanate, et de l'autre composant introduit, contenant des groupes isocyanate, avec obtention du mélange d'isocyanates comprenant du catalyseur de trimérisation de groupes isocyanate.

**4.** Procédé selon la revendication 1, dans lequel l'étape a) comprend :

a.1) l'introduction en continu du premier composant isocyanate (K1) et du deuxième composant isocyanate (K2) différent du premier dans un premier dispositif mélangeur (M1) et le mélange dans ce premier dispositif mélangeur (M1) des composants isocyanate introduits, avec obtention d'un mélange d'isocyanates ;
a.2) l'introduction en continu du catalyseur de trimérisation (K3) de groupes isocyanate et du mélange d'isocyanates obtenu dans l'étape a.1) dans un deuxième dispositif mélangeur (M2) et le mélange du mélange d'isocyanates introduit et du catalyseur de trimérisation (K3) de groupes isocyanate introduit, avec obtention du mélange d'isocyanates comprenant du catalyseur de trimérisation de groupes isocyanate.

**5.** Procédé selon la revendication 4, dans lequel dans l'étape a) le mélange d'isocyanates quittant en continu le dispositif mélangeur (M1) est envoyé, avant son introduction dans le deuxième dispositif mélangeur (M2), à travers une zone de temps de séjour placée en amont du deuxième dispositif mélangeur (M2).

**6.** Procédé selon l'une quelconque des revendications précédentes, dans lequel l'étape a) est effectuée à une température dans la plage de 10 °C à < 50 °C.

**7.** Procédé selon l'une quelconque des revendications précédentes, dans lequel la nature et la composition du premier composant isocyanate et du deuxième sont respectivement fois accordées l'un à l'autre de sorte que le mélange d'isocyanates contenant des groupes isocyanurate obtenu dans l'étape d) présente une teneur en NCO dans la plage de 24 % en masse à 32 % en masse et une viscosité dans la plage de 50 mPa.s (à 25 °C) à 40 000 mPa.s (à 25 °C).

**8.** Procédé selon l'une quelconque des revendications précédentes, en particulier selon la revendication 7, dans lequel le premier composant isocyanate (K1) et le deuxième composant isocyanate (K2) sont choisis chacun dans le groupe constitué par (i) le diisocyanate de méthylène-diphénylène, (ii) des mélanges de diisocyanate de méthylène-diphénylène et polyisocyanate de polyméthylène-polyphénylène, (iii) le diisocyanate de toluylène et (iv) des mélanges de (i) ou (ii) avec (iii) .

**9.** Procédé selon l'une quelconque des revendications précédentes, dans lequel le catalyseur de trimérisation de groupes isocyanate utilisé dans l'étape a) est choisi dans le groupe constitué par les hydroxydes d'ammonium quaternaire, les hydroxydes de métaux alcalins, les alcoolates de métaux alcalins, les trialkylphosphines, les pyridines substituées en position *para,* les sels organométalliques, les acides de Lewis et les sels de métaux alcalins avec des acides organiques.

**10.** Procédé selon la revendication 9, dans lequel dans l'étape c) est ajouté un inhibiteur qui comprend un chlorure d'acide organique, le chlorure d'acide organique étant utilisé en un rapport molaire de chlorure d'acide : catalyseur de trimérisation de groupes isocyanate dans la plage de 1 : 3 à 1 : 1.

**11.** Procédé selon l'une quelconque des revendications 1 à 8, dans lequel le catalyseur de trimérisation de groupes isocyanate utilisé dans l'étape a) comprend un alkylaminoalkylphénol, de préférence le tris(diméthyl-aminométhyl)-phénol et en particulier est un alkylaminoalkylphénol, de préférence le tris(diméthylamino-méthyl)-phénol.

**12.** Procédé selon la revendication 11, dans lequel aucun inhibiteur n'est utilisé pour l'inactivation du catalyseur de trimérisation de groupes isocyanate.

**13.** Procédé selon l'une quelconque des revendications 5 à 12, dans lequel la zone de temps de séjour placée en amont du deuxième dispositif mélangeur (M2) est un réacteur tubulaire qui en option contient des éléments mélangeurs.

**14.** Procédé selon l'une quelconque des revendications précédentes, dans lequel les première, deuxième et troisième zones de temps de séjour comprennent chacune un cuve à agitation, en option avec échangeur thermique placé en amont, ou un réacteur tubulaire thermostatable qui en option contient des éléments mélangeurs.

**15.** Procédé selon l'une quelconque des revendications précédentes, dans lequel

les premier et deuxième composants isocyanate sont prélevés chacun d'un courant de produit de l'unité de production d'isocyanates correspondante, ou
les premier et deuxième composants isocyanate sont prélevés chacun d'un récipient de stockage ou de transport qui n'est pas lié à l'unité de production d'isocyanates correspondante.

**16.** Procédé selon l'une quelconque des revendications précédentes, dans lequel la température du mélange d'isocyanates comprenant contenant des isocyanurates obtenu dans l'étape c) du catalyseur de trimérisation de groupes isocyanate inactif est ajusté à la température dans l'étape d) à une vitesse de la modification de température dans la plage de 15 °C/min à 200 °C/min.

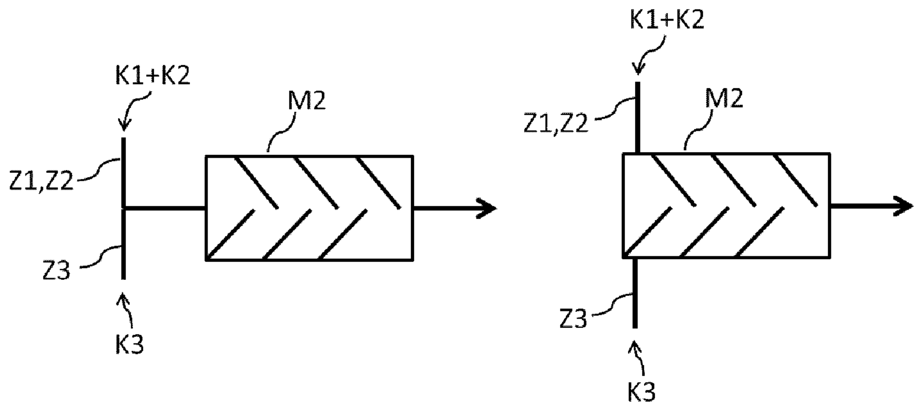


FIG. 1

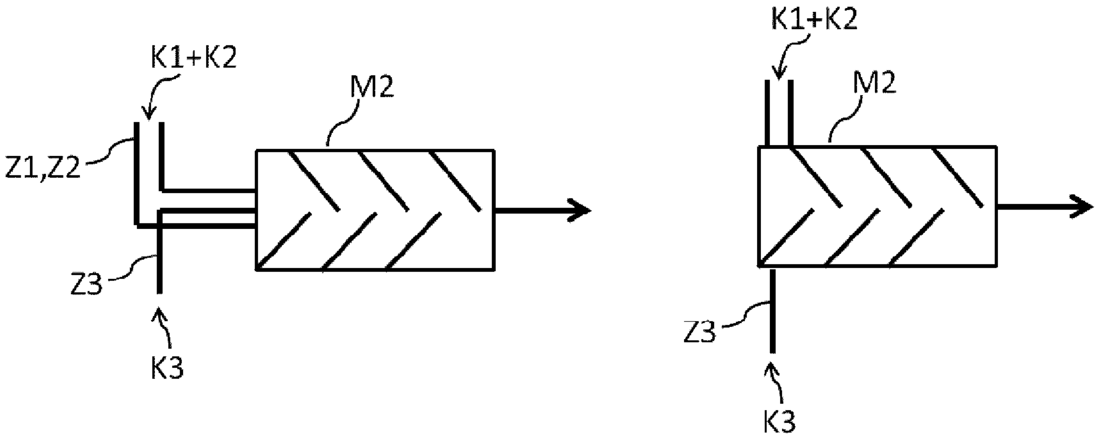


FIG. 2

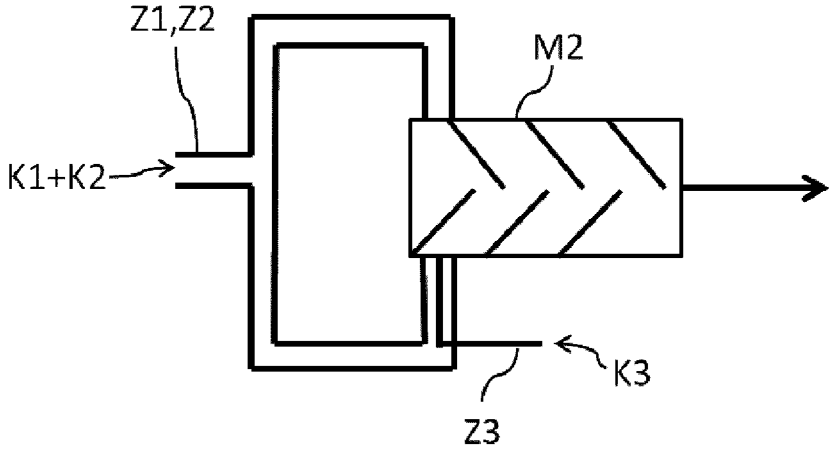


FIG. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2009039332 A1
- US 4743672 A
- DE 102004060121 A1
- WO 2017050776 A1